# EUROPÄISCHE PATENTSCHRIFT

(11) **EP 4 101 976 B1**
(45) Veröffentlichungstag und Bekanntmachung des Hinweises auf die Patenterteilung: **04.09.2024**
(21) Anmeldenummer: 22188404.2
(22) Anmeldetag: 29.05.2020
(51) Int. Cl.: D21C 5/00, D21H 11/14, D21H 13/12, C08J 11/00, D01G 11/00, D21B 1/00, D21B 1/02

(54) **VERFAHREN ZUM HERSTELLEN EINES CELLULOSISCHEN PAPIERSTOFFES AUS ALTTEXTILIEN**
METHOD FOR PRODUCING A CELLULOSE PAPER MATERIAL MADE OF OLD TEXTILES
PROCÉDÉ DE FABRICATION D'UNE PÂTE À PAPIER CELLULOSIQUE À PARTIR DE VIEUX TEXTILES

(30) Priorität: 04.06.2019 EP 19178178
(43) Veröffentlichungstag der Anmeldung: 14.12.2022
(62) Teilanmeldung aus: 20734108.2
(73) Patentinhaber: LENZING AKTIENGESELLSCHAFT, 4860 Lenzing (AT)
(72) Erfinder: Herchl, Richard, 4910 Ried im Innkreis (AT); Weilach, Christian, 4840 Vöcklabruck (AT)
(74) Vertreter: Dilg, Haeusler, Schindelmann Patentanwaltsgesellschaft mbH

(56) Entgegenhaltungen:
- WO-A1-2012/042146
- WO-A1-2014/081291
- WO-A1-97/20102
- US-A- 4 983 256

## Beschreibung

Die Erfindung betrifft ein Verfahren zum Selektieren von Cellulose-haltigen Alttextilien.

Die Erfindung kann sich somit auf das technische Gebiet des Recycelns von Alttextilien beziehen. Ferner kann sich die Erfindung auf das technische Gebiet des Herstellens von Papierstoffen beziehen.

Papierprodukte wie z.B. Papier oder Karton werden hauptsächlich aus dem Rohstoff Holz hergestellt. Dies kann in Hinblick auf eine ressourcen- und umweltschonende Produktionsweise aber nicht unbedingt als zufriedenstellend angesehen werden. Eine Ergänzung oder Alternative hierzu stellt daher das Recycling von Altpapier dar. Bei der Verwendung von rezyklierten Materialien als Rohstoffe für die Herstellung von Zellstoff, welcher für die Papierherstellung verwendet wird, stellt sich aber das Problem der Reinheit dieser Rezyklate. Diese sind häufig mit nicht holztypischen Materialien verunreinigt. Weiterhin kann bei der Papierherstellung eine Faser nur wenige Male rezykliert werden, denn durch die verschiedenen Behandlungsschritte werden die Kettenlänge (der Glukoseeinheiten) bzw. die Faserlänge der Cellulose zu kurz für einen Papierherstellungsprozess. Ferner ist es technisch problematisch, Papierstoffe mit spezifischen Eigenschaften aus Rezyklaten herzustellen. Somit müssen recycelte Papierstoffe aufwendig (nach)bearbeitet werden, um erwünschte Eigenschaften bereitzustellen.

Bei Hygienepapieren und Zeitungsdruckpapier ist heutzutage sogar kaum mehr eine Steigerung des Altpapieranteils möglich. Um die Verwertungsquoten weiter zu steigern, wird deshalb auch für höherwertige Papiere (für Zeitschriften/Magazine) vermehrt Altpapier eingesetzt. Bei mehrfachem Recycling verkürzen sich allerdings, wie oben erwähnt, die Fasern und müssen aus dem Kreislauf ausgeschleust werden. Aus diesem Grund müssen ständig frische Fasern z.B. aus Zeitschriften (Holzschliff) und/oder Zellstoff aus anderen Quellen in den Kreislauf gelangen. So wird vermieden, dass es bei mehrfachem Recycling zum "Recyclingkollaps" kommen kann. Es kann daher ein Bedarf bestehen, den bekannten Papierproduktionsprozess effizienter aber gleichzeitig auch ressourcenschonender auszugestalten.

Es ist eine Aufgabe der vorliegenden Erfindung, einen cellulosischen Papierstoff auf effiziente, robuste, und ressourcensparende Weise bereitzustellen.

Diese Aufgabe wird durch den Gegenstand gemäß dem unabhängigen Patentanspruch gelöst. Bevorzugte Ausgestaltungen ergeben sich aus den abhängigen Patentansprüchen.

Gemäß einem Beispiel zum besseren Verständnis der Erfindung ist ein Verfahren zum Herstellen eines cellulosischen Papierstoffes beschrieben. Das Verfahren weist auf: i) Bereitstellen von Alttextilien als Ausgangsstoff, wobei die Alttextilien Cellulose und nicht-cellulosische Fremdstoffe (insbesondere synthetische Kunststoffe) aufweisen, ii) zumindest teilweises Abreichern der nicht-cellulosischen Fremdstoffe von der Cellulose, um einen abgereicherten Ausgangsstoff bereitzustellen, und iii) Bilden des cellulosischen Papierstoffes aus dem abgereicherten Ausgangsstoff.

Gemäß einem Beispiel zum besseren Verständnis der Erfindung ist ein cellulosischer Papierstoff aus rezyklierten Alttextilien beschrieben, welcher zumindest eine der folgenden Merkmale aufweist:
i) intrinsische nicht-cellulosische Fremdstoffe (insbesondere Metalloxide, weiter insbesondere Pigmente), wobei die intrinsischen nicht-cellulosischen Fremdstoffe in dem Papierstoff inkorporiert sind,
ii) synthetischer Kunststoff (insbesondere PUR, weiter insbesondere Elastan), wobei der synthetische Kunststoff in dem Papierstoff inkorporiert ist,
iii) 10% oder weniger Cellulose mit einem durchschnittlichen Polymerisationsgrad in dem Bereich 50 bis 200 Monomere,
iv) Cellulose mit einem durchschnittlichen Polymerisationsgrad von 300 Monomeren (Grenzviskosität ca. 175 mL/g) oder mehr, insbesondere 500 Monomeren oder mehr.

Gemäß einem Beispiel zum besseren Verständnis der Erfindung ist ein Verwenden von (aufbereiteten) Alttextilien als Ausgangsstoff zum Bereitstellen eines cellulosischen Papierstoffs beschrieben.

Gemäß einem Aspekt der vorliegenden Erfindung ist ein Verfahren zum Selektieren von Cellulose-haltigen Alttextilien (insbesondere von einem Alttextil Rohrezyklat) beschrieben. Das Verfahren weist auf: i) Bestimmen eines für die Qualität (insbesondere des durchschnittlichen Polymerisationsgrads) der Cellulose indikativen Qualitätskriterions, ii) Vergleichen des bestimmten Qualitätskriterions mit einem vordefinierten Qualitätskriterion, und, basierend auf dem Ergebnis des Bestimmens: a) Zuführen von ersten Cellulose-haltigen Alttextilien, deren Qualitätskriterion nicht dem vordefinierten Qualitätskriterion entspricht, zu einem Verfahren zum Herstellen eines Papierstoffes, insbesondere einem oben beschrieben Verfahren zum Herstellen eines Papierstoffes; b) Zuführen von zweiten Cellulose-haltigen Alttextilien, deren Qualitätskriterion dem vordefinierten Qualitätskriterion entspricht, zu einem Verfahren zum Herstellen eines regenerierten cellulosischen Formkörpers (insbesondere mittels einem Lyocellverfahren, oder einem Viskoseverfahren (insbesondere einem Carbamatverfahren oder einem Kaltalkaliverfahren).

Gemäß einem Beispiel zum besseren Verständnis der Erfindung ist ein Verfahren zum Identifizieren eines Cellulose-aufweisenden Papierstoffs (insbesondere eines Papierstoffes wir oben beschrieben) offenbart. Das Verfahren weist auf: i) Ermitteln eines Datensatzes, der für mehrere Bestandteile des Papierstoffs indikativ ist, ii) Hinterlegen des mit dem Papierstoff korrelierten Datensatzes in einer Datenbank, und iii) Abgleichen der Information mit dem Datensatz in der Datenbank. Hierbei beziehen sich die mehreren Bestandteile auf intrinsische nicht-cellulosische Bestandteile des Papierstoffs, und die intrinsischen nicht-cellulosischen Bestandteile stammen aus Alttextilien.

Im Rahmen dieses Dokuments kann unter dem Begriff "nicht-cellulosische Fremdstoffe" jeglicher Stoff verstanden werden, welcher in dem Ausgangsstoff (insbesondere einem Mischtextil) vorhanden ist, aber nicht auf Cellulose basiert. Hierbei handelt es sich aber nicht nur um unvermeidbare Verunreinigungen, sondern um signifikante Anteile an z.B. synthetischen Fasern (Kunstfasern) und/oder Metalloxiden, welche sich in dem Ausgangsstoff (Mischtextilien) befinden.

Im Rahmen dieses Dokuments kann unter dem Begriff "Cellulose" insbesondere eine organische Verbindung verstanden werden, die Bestandteil pflanzlicher Zellwände ist oder synthetisch hergestellt werden kann. Cellulose ist ein Polysaccharid (d. h. ein Vielfachzucker). Cellulose ist unverzweigt und weist typischerweise mehrere hundert bis zehntausende β-D-Glucose-Moleküle (β-1,4-glycosidische Bindung) bzw. Cellobiose-Einheiten auf. Aus Cellulosemolekülen werden von Pflanzen kontrolliert Cellulosefasern aufgebaut. Mit einem technischen Prozess können Cellulosemoleküle unter Bildung von Regeneratfasern zusammengelagert werden, zum Beispiel als im Wesentlichen reißfeste Fasern.

Im Rahmen dieses Dokuments können unter dem Begriff "Alttextilien" Reste aus einer Kleidungsherstellung und Altkleider verstanden werden.

Im Rahmen dieses Dokuments kann unter dem Begriff "Reste aus einer Kleidungsherstellung" insbesondere Ausschuss und/oder Verschnitt eines Cellulose aufweisenden oder daraus bestehenden Textils oder Garnes verstanden werden, wobei diese Reste während eines Verfahrens zum Herstellen von Kleidung anfallen. Beim Herstellen von Kleidung wird zum Beispiel ein Cellulose aufweisendes Textil als Ausgangsstoff hergestellt, aus dem dann flächige Teile (zum Beispiel in Form einer T-Shirt-Hälfte) ausgeschnitten werden. Übrig bleiben Reste, die gemäß einem exemplarischen Ausführungsbeispiel wieder einem Verfahren zum Herstellen eines Cellulose aufweisenden Formkörpers zugeführt werden können. Bei Resten aus einer Kleidungsherstellung kann es sich also um einen Cellulose aufweisenden oder daraus bestehenden Ausgangsstoff handeln, der zum Wiedergewinnen von Cellulose verwendet werden kann, bevor ein Verbraucher die Reste als Kleidung oder in anderer Weise verwendet hat. Reste aus einer Kleidungsherstellung können insbesondere aus im Wesentlichen reiner Cellulose gebildet sein, insbesondere ohne separate und nicht Cellulose aufweisende Fremdkörper (wie zum Beispiel Knöpfe, Textildruck oder Nähte).

Im Rahmen dieses Dokuments können unter dem Begriff "Altkleider" insbesondere Cellulose aufweisende Kleidungsstücke oder Heimtextilien (Bettwäsche etc.) verstanden werden, die bei Rückgewinnung zumindest eines Teils der Cellulose bereits von einem Verbraucher benutzt (insbesondere getragen) worden sind. Bei Altkleidern kann es sich also um einen Cellulose aufweisenden Ausgangsstoff handeln, der erhebliche Mengen von Fremdstoffen aufweisen kann (aber nicht muss) und zum Wiedergewinnen von Cellulose verwendet werden kann, nachdem ein Verbraucher die Altkleider als Kleidung oder in anderer Weise verwendet hat. Altkleider können insbesondere aus einer Mischung aus Cellulose und einem oder mehreren Fremdstoffen gebildet sein, insbesondere aufweisend (insbesondere bei Kleidungsstücken häufig verwendeten) synthetischen Kunststoff (wie zum Beispiel Polyester und/oder Elastan) und/oder separate und nicht Cellulose aufweisende Fremdkörper (wie zum Beispiel Knöpfe, Textildruck oder Nähte). Unter Polyester werden insbesondere Polymere mit Esterfunktionen (R-[-CO-O-]-R) in ihrer Hauptkette verstanden. Zu Polyestern gehören Polycarbonate und Polyethylenterephthalat. Unter Elastan wird insbesondere eine dehnbare Chemiefaser mit hoher Elastizität verstanden. Ein Elastan zugrundeliegendes Blockcopolymer kann einen Massenanteil von mindestens 85 % Polyurethan enthalten.

Der Begriff "Neutextilien" umfasst textile Rohstoffe (Naturfasern, Chemiefasern), und nichttextile Rohstoffe, die durch ein oder mehr Verfahren zu linien-, flächenförmigen oder räumlichen Produkten verarbeitet wurden. Der Begriff "Neutextilien" kann sich sowohl mit dem Begriff "Ausschuss aus der Kleiderherstellung" decken als auch fertige Produkte (z.B. Kleidung, Bettwäsche) bezeichnen, wobei letztere im Wesentlichen noch nicht von einem Benutzer verwendet/getragen wurden. In einem Ausführungsbeispiel wird zwischen Alttextilien und Neutextilien unterschieden. In einem anderen Ausführungsbeispiel kann der Begriff Alttextilien auch diese Neutextilien umfassen (fertige Textil-Produkte, welche nicht verwendet werden, können ebenfalls als Alttextilien oder Kleidungsauschuss verstanden werden).

Im Rahmen dieses Dokuments kann unter dem Begriff "synthetischer Kunststoff" insbesondere ein Stoff verstanden werden, welcher aus Makromolekülen aufgebaut ist und synthetisch hergestellt wird. Die jeweiligen Makromoleküle eines Kunststoffes sind Polymere und daher aus wiederholenden Grundeinheiten (Wiederholeinheiten) aufgebaut. Die Größe der Makromoleküle eines Polymers kann zwischen einigen tausend bis über eine Million Grundeinheiten variieren. Beispielsweise besteht das Polymer Polyethylen (PE) aus aneinander verbundenen, sich vielfach wiederholenden Ethyleneinheiten. Hierbei können die Polymere unverzweigte, verzweigte oder vernetzte Moleküle sein. Kunststoffe können bezüglich ihrer physikalischen Eigenschaften im Prinzip in drei Gruppen unterteilt werden: Thermoplaste, Duroplaste und Elastomere. Ferner können diese Eigenschaften auch in Untergruppen kombiniert sein, z.B. bei thermoplastischen Elastomeren. Wichtige Merkmale von Kunststoffen sind ihre technischen Eigenschaften, wie Formbarkeit, Härte, Elastizität, Bruchfestigkeit, Temperatur-, Wärmeformbeständigkeit und chemische Beständigkeit, die sich durch die Wahl der Makromoleküle, Herstellungsverfahren und in der Regel durch Beimischung von Additiven in weiten Grenzen variieren lassen. Typische Reaktionen zum Herstellen von synthetischem Kunststoff aus Monomeren oder Pre-Polymeren sind: Kettenpolymerisation, Polyaddition oder Polykondensation. Beispiele für synthetische Kunststoffe, welche insbesondere auch in Textilien verwendet werden, sind z.B. Polyurethan (PUR), insbesondere als Bestandteil von Elastan, Polyester (PE, z.B. Polyethylenterephthalat (PET)), Polyamid (PA, z.B. Nylon, Perlon) und Polyether, insbesondere Polyethylenglykol (PEG) als Bestandteil von Elastan. Synthetischer Kunststoff kann in diesem Zusammenhang synthetische Fasern in einem Textil bzw. Alttextil bilden.

Im Rahmen dieses Dokuments kann unter dem Begriff "Elastan" insbesondere ein synthetischer Kunststoff verstanden werden, welcher thermoplastische und elastische Eigenschaften aufweist. Elastan kann daher als thermoplastisches Elastomer (TPE) bezeichnet werden. Elastan kann als Block-Copolymer vorliegen, welches insbesondere durch die folgenden beiden Blöcke gekennzeichnet ist: Polyurethan (PUR) und Polyethylenglycolether (PEG). Hierbei können die PUR Segmente steife Abschnitte bilden, welche sich mit weichen, elastischen PEG Abschnitten abwechseln. PUR kann steife, gestreckte Abschnitte bilden, die sich längs zueinander anlagern und durch den Aufbau von Nebenvalenzkräften den Zusammenhalt z.B. einer Faser ermöglichen. Die gummiartigen PEG Blöcke (z.B. jeweils etwa 40 bis 50 Monomereinheiten) können hingegen stark zusammengeknäult vorliegen, wobei diese aber auch gestreckt werden können.

Hierbei kann Elastan als Kräuselstruktur mit sehr hoher Dehnbarkeit (mehrere 100 %, z.B. 700 %) vorliegen. Die Dichte kann z.B. zwischen 1,1 und 1,3 g/cm³ betragen und die Festigkeit beispielsweise 5 bis 12 cN/tex. Die Elastizität kann hierbei temperaturabhängig sein. Ferner können unter dem Begriff "Elastan" sowohl Elastan selbst, als auch verwandte thermoplastische Elastomere (z.B. Lycra, Elastollan, Desmopan, Texin und Utechllan) verstanden werden.

Im Rahmen dieses Dokuments kann unter dem Begriff "Papierherstellung" insbesondere verstanden werden, dass aus einem Cellulose-haltigen und aufbereiteten Ausgangsstoff ein cellulosischer Papierstoff gebildet wird, welcher dann zu einem Papierprodukt weiterverarbeitet wird. Alle Bearbeitungsschritte, welche von einem Cellulose-haltigen Ausgangsstoff zu einem Papierstoff führen, können also als Papierherstellungsverfahren bezeichnet werden. Ferner können auch alle Bearbeitungsschritte, welche von dem Papierstoff zu einem Papierprodukt führen, als Papierherstellung bezeichnet werden.

Ein "Papierstoff" kann in diesem Zusammenhang als ein Papierausgangsstoff verstanden werden, aus welchem dann ein Papierprodukt wie z.B. ein Papier, ein Karton, ein Filter oder dergleichen gebildet werden kann. Ein Papierstoff kann ein Verbundmaterial sein, das zumindest Zellstoff (Cellulose) und einen Binder enthält. Der Papierstoff kann hierbei in fester Form vorliegen, aber auch als Suspension, z.B. in Wasser. Ein "Papierstoff" kann in weiterem Sinne auch das Papierprodukt selbst umfassen. Ferner kann ein Papierstoff auch Papier oder papierähnliche Materialien, sowie Karton, Filtermaterial, Isolationsmatten, Saugvliese, faserverstärkte Flachmaterialien usw. umfassen. Papierstoff kann durch Entwässerung einer Fasersuspension, z.B. auf einem Sieb, gebildet werden. Der Papierstoff kann in nachfolgenden Arbeitsschritten weiter verdichtet und getrocknet werden. Ein Papierstoff kann aber auch ein flächiger Werkstoff (Faservlies) sein, der im Wesentlichen aus (Cellulose-) Fasern besteht.

Im Rahmen dieses Dokuments kann unter dem Begriff "Abreichern" insbesondere ein Prozess verstanden werden, mittels welchem eine Komponente aus einer Mischung von zumindest zwei Komponenten zumindest teilweise entfernt wird. Beispielsweise kann ein Alttextil die Komponenten Cellulose und einen Polyester wie PET aufweisen. Wird nun der Anteil der Komponente PET reduziert, so kann dies als Abreichern von PET bezeichnet werden. Es sind eine Vielzahl von Möglichkeiten bekannt ein solches Abreichern durchzuführen. Zunächst kann ein Abreichern mechanisch erfolgen, z.B. durch Dichte-Trennung. Zusätzlich oder stattdessen kann das Abreichern mittels einem chemischen Trennen durchgeführt werden. Beispiele hierfür sind ein Hydrolysieren oder Derivatisieren der abzureichernden Komponente. Weiterhin kann die abzureichernde Komponente mittels eines Lösungsmittels entfernt werden. Bei dem Abreichern kann die abzureichernde Komponente abgebaut bzw. zerstört werden. Weiterhin kann die abzureichernde Komponente nach dem Abreichern in ihrer ursprünglichen Form, also nicht-abgebaut, vorliegen. In anderen Worten kann unter dem Begriff "Abreichern" insbesondere verstanden werden, dass ein eingehender Ausgangsstoff derart behandelt (abgereichert) wird, dass sich ein ausgehender, abgereicherter Ausgangsstoff in seinen chemischen/physikalischen Eigenschaften bzw. in seiner stofflichen Zusammensetzung zumindest teilweise von dem eingehenden Ausgangsstoff unterscheidet, insbesondere zumindest eine Komponente in geringerer Konzentration aufweist. Während eins chemischen Abreicherungsprozesses kann beispielsweise ein Koch-Prozess, insbesondere eine alkalische Kochung, durchgeführt werden. Ferner können beispielsweise während eines Abreicherungsprozesses synthetische Fasern wie Polyester von Cellulose (mittels der Kochung) abgereichert werden.

Im Rahmen dieses Dokuments kann unter dem Begriff "Polymerisationsgrad" die Anzahl der Grundbausteine (Monomere) pro Polymermolekül (z.B. Cellulose Molekül) verstanden werden. Der Polymerisationsgrad kann identisch mit dem Quotienten der mittleren molaren Masse des Polymers und der molaren Masse seiner Wiederholeinheit (der Monomereinheit) sein. Die genaue Zahl kann, außer bei Proteinen, meist nur ein Mittelwert über die betrachtete Probe sein. Dieser Mittelwert wird als durchschnittlicher Polymerisationsgrad (DP) bezeichnet. Der Polymerisationsgrad sowie die raumgeometrische Verteilung der Monomere im Molekül (d.h. die stereochemische Anordnung der Molekülzweige) können großen Einfluss auf die physikalischen und besonders auf die mechanischen Eigenschaften eines Polymers besitzen. Der DP beträgt z.B. für Baumwolle etwa 3000 oder mehr, für Viskosefasern 250 bis 700, für Polyamide 100 bis 180 und für Polyester 130 bis 220.

Gemäß einem exemplarischen Ausführungsbeispiel der Erfindung wird ein besonders effizientes, robustes, und ressourcenschonendes Verfahren zum Herstellen eines cellulosischen Papierstoffes dadurch bereitgestellt, dass (Cellulose-haltige) Alttextilien als Ausgangsstoff verwendet werden, aus welchen, nach einem zumindest teilweisen Abreichern der nicht-cellulosischen Fremdstoffe von der Cellulose, der cellulosische Papierstoff gebildet werden kann. Zur Herstellung eines Papierstoffes wird konventionell Holz als Ausgangsstoff verwendet, bzw. bei einem Recycling, dann Altpapier. Im Falle von Holz stellt sich das Problem, dass letztendlich ständig neue Bäume gefällt werden müssen, was mit hohem Aufwand verbunden und auch wenig ressourcenschonend ist. Altpapier hingegen bringt, wie oben bereits ausgeführt, das Problem mit sich, dass im Laufe mehrerer Recycling Zyklen die Faser-, und Kettenlängen (Glukoseeinheiten) der Cellulose immer kürzer werden, so dass diese dem Recycling Kreislauf entzogen werden müssen. Wenn bestimmte Eigenschaften in dem Papierstoff erreicht werden sollen, so ist dies bisher nur unter sehr hohem zusätzlichen Aufwand möglich. Es hat sich nun aber überraschend herausgestellt, dass Alttextilien (welche Cellulose und weitere Fremdstoffe aufweisen) ein hervorragendes Ausgangsmaterial für die Papierherstellung darstellen.

Gemäß einem exemplarischen Ausführungsbeispiel der Erfindung kann bei der Herstellung eines Papierstoffes ein Bereitstellen bzw. eine Zumischung einer hochwertigen Cellulose durchgeführt werden. Diese hochwertige Cellulose kann in einer Reinheit vorliegen, welche vor allem in Prozessen der textilnahen Industrie verwendet wird, denn bei einer Faserverarbeitung zur Garn- oder Vliesbildung werden generell besonders hohe Cellulose Qualitäten benötigt. Cellulose aus Alttextilen kann zu einem hohen Prozentsatz aus Baumwolle stammen und ist daher naturgemäss gegenüber gängiger Holz-Cellulose von besonders hoher Qualität insbesondere in Bezug auf Reissfestigkeit, Zugfestigkeit, Dehnung, usw. Diese besonderen Qualitätsmerkmale können insbesondere auf den damit in Verbindung stehenden Kettenlängen von Baumwolle basieren.

Bislang kommen Alttextilien als Cellulose-Quelle für die Papierherstellung nicht in Frage, denn heutige Alttextilien können stark mit Fremdstoffen wie Kunststoffen (synthetische Fasern) oder Metalloxiden wie Pigmenten belastet sein. Einerseits, weil die Textilien aus Kunststoffen bestehen (solche können sich als Ganzes sortieren lassen), andererseits aber, weil heutzutage viele auch vorwiegend aus Naturfasern bestehenden Alttextilien partiell mit Kunststoffanteilen belastet sind oder auf eine Naturfaser ein Kunststoff zur Eigenschaftsveränderung appliziert wurde. Es hat sich nun aber überraschend herausgestellt, dass residuale Bestandteile in Alttextilien, insbesondere Metalloxide und bestimmte Kunststoffe, im Rahmen der Zellstoffaufbereitung als positive Eigenschaftsveränderer verwendet werden können.

Zusammengefasst wurde gefunden, dass Alttextilien ein überraschend effizientes und ressourcenschonendes Ausgangsmaterial für die Papierherstellung ist, welches eine Vielzahl von unerwarteten und flexibel einsetzbaren Vorteilen bereitstellt.

Im Weiteren werden zusätzliche Ausführungsbeispiele der Verfahren und des Verwendens beschrieben.

Gemäß einem Ausführungsbeispiel weist das Abreichern ferner auf: i) mechanisches Abtrennen zumindest eines Teils der nicht-cellulosischen Fremdstoffe, und/oder ii) chemisches Abtrennen zumindest eines Teils der der nicht-cellulosischen Fremdstoffe. Dies kann den Vorteil haben, dass ein gründliches Abreichern mit bekannten und etablierten Verfahren durchgeführt werden kann.

Gemäß einem Ausführungsbeispiel kann das Abtrennen der nicht-Faserbestandteile von den Faserbestandteilen aufgrund unterschiedlicher physikalischer Eigenschaften, insbesondere mittels Metallabscheidens und/oder gravitativen Abscheidens, erfolgen. Metallische Komponenten (zum Beispiel Reißverschlüsse, Nieten, etc.) können zum Beispiel aufgrund ihrer magnetischen Eigenschaften abgetrennt werden. Auch unterschiedliche Einflüsse der Gravitationskraft auf unterschiedliche Bestandteile können zum Trennen eingesetzt werden.

Gemäß einem Ausführungsbeispiel kann das mechanische Abtrennen basierend auf Dichteunterschieden zwischen den nicht-cellulosischen Fasern und den cellulosischen Fasern erfolgen. Zum Beispiel können in einer Zentrifuge Materialien unterschiedlicher Dichte aufgrund unterschiedlich starker Zentrifugalkräfte separiert werden. Nach Überführen der Bestandteile in ein flüssiges Medium können sich diese aufgrund unterschiedlicher Dichten zum Teil auf der Oberfläche ansammeln, während andere Bestandteile schweben oder sich am Boden absetzen.

Gemäß einem Ausführungsbeispiel kann das mechanische Abtrennen basierend auf unterschiedlichen elektrostatischen Eigenschaften zwischen den nicht-cellulosischen Fasern und den cellulosischen Fasern erfolgen. Aufgrund unterschiedlicher elektrostatischer Eigenschaften können die unterschiedlichen Fasern auf ein angelegtes elektrisches Feld in unterschiedlicher Weise reagieren. Dieser wiederum erlaubt ein Auftrennen cellulosischer Fasern gegenüber nicht-cellulosischen Fasern.

Gemäß einem Ausführungsbeispiel kann das mechanische Abtrennen ein Suspendieren (d.h. ein Überführen in eine Suspension) der Faserbestandteile in einem flüssigen Medium, insbesondere einem wässrigen Medium, und ein Trennen der nicht-cellulosischen Fasern von den cellulosischen Fasern aufgrund unterschiedlicher physikalischer Eigenschaften in dem flüssigen Medium (insbesondere unterschiedlichen gravitativen, zentrifugalkraftbezogenen, flotativen und/oder elektrostatischen Eigenschaften) aufweisen. Wenn die unterschiedlichen Fasern in einem flüssigen Medium aufgrund ihrer unterschiedlichen Zusammensetzung unterschiedliches Verhalten zeigen, erlaubt auch dies ein Auftrennen der unterschiedlichen Faserbestandteile.

Gemäß einem Ausführungsbeispiel kann das flüssige Medium mindestens einen Zusatz zum Verstärken der unterschiedlichen physikalischen Eigenschaften aufweisen, insbesondere ein Dispergiermittel und/oder ein Quellungsmittel. Unter einem Dispergiermittel oder Dispergatoren können insbesondere Additive verstanden werden, die das Dispergieren, also eine Feinverteilung eines Stoffes (zum Beispiel einer Faser) in einem kontinuierlichen Medium (zum Beispiel in einer Flüssigkeit) ermöglichen oder stabilisieren. Unter einem Quellungsmittel können insbesondere Additive verstanden werden, die ein Quellen einer Substanz fördern. Unter Quellen kann ein Vorgang verstanden werden, bei dem ein Stoff (insbesondere eine Flüssigkeit) in einen Festkörper eindringt und eine Volumenvergrößerung des Letzteren bewirkt. Wenn dem Medium ein oder mehrere solche Additive zugesetzt werden, können die Diskrepanzen in den Eigenschaften der diversen Fasern, die das mechanische Auftrennen der unterschiedlichen Fasern bedingen, erhöht werden. Dies erhöht die Effizienz der Trennung.

Gemäß einem Ausführungsbeispiel kann das chemische Abtrennen ein selektives Lösen nur zumindest eines Teils der nicht-cellulosischen Fasern oder nur zumindest eines Teils der cellulosischen Fasern in einem Lösungsmittel, und ein Abtrennen, insbesondere Abfiltrieren, zumindest eines Teils der nicht gelösten Faserbestandteile aufweisen. Anders ausgedrückt können die verschiedenen Fasern einem (zum Beispiel flüssigen, insbesondere wässrigen) Medium zugeführt werden, in dem sich nur bestimmte dieser Fasern, insbesondere selektiv Polyesterfasern, ausgeprägt lösen, wohingegen andere Fasern, insbesondere Cellulosefasern, dort kein oder nur ein schwächeres Lösungsverhalten zeigen. Die sich nicht oder nicht nennenswert oder schwächer lösenden Fasern (insbesondere Cellulosefasern) können abfiltriert oder abzentrifugiert werden und können dann getrennt von den gelösten Fasern weiterverarbeitet werden.

Gemäß einem Ausführungsbeispiel kann das mechanische Abtrennen und/oder das chemische Abtrennen ein Abtrennen von synthetischen Fasern als nicht-cellulosische Fasern aufweisen. In den wiederverwerteten textilen Materialien, insbesondere Altkleider und/oder textile Abfallreste, finden sich häufig nicht-cellulosische Fasern synthetischen Ursprungs. Als Beispiel für solche synthetischen Fasern können Polyester, Polyamid und/oder Elastan genannt werden. Diese können mit den hier beschriebenen Verfahren wirksam von Cellulosefasern getrennt werden.

Gemäß einem Ausführungsbeispiel kann das chemische Abtrennen ein Zuführen einer alkalischen Lösung, insbesondere unter Verwendung oxidierender Agenzien, aufweisen, insbesondere eine alkalische Kochung. Insbesondere kann das Zuführen der alkalischen Lösung zum Abbauen nicht-cellulosischer Fasern, insbesondere synthetischer Fasern, weiter insbesondere von Polyesterfasern, erfolgen. Besonders Polyester kann dadurch in wasserlösliche Konstituenten gespalten werden, welche mittels den im Prozess anfallenden Abwässern von den Cellulosefasern abgetrennt werden können.

Gemäß einem weiteren Ausführungsbeispiel weist das chemische Abtrennen ferner auf: Durchführen eines Koch-Prozesses, insbesondere mittels einer alkalischen Kochlösung. Dies hat den Vorteil, dass das Abreichern auf effiziente Weise mittels etablierter Verfahren durchgeführt werden kann und somit auf einfache Weise implementierbar ist.

Gemäß einem bevorzugten Ausführungsbeispiel kann die alkalische Kochung des wie beschrieben vorprozessierten cellulosebasierten (insbesondere baumwollbasierten) Textilmaterials, aus dem cellulosische Fasern angereichert werden (d.h. vorwiegend cellulosische Fasern gewonnen werden), zum Erzeugen von weiter aufgereinigtem Zellstoff folgendermaßen weiterverarbeitet werden: Die Fasern, insbesondere die bereits angereicherten cellulosischen (oder vorwiegend cellulosischen) Fasern, können mit einer alkalischen Lösung (zum Beispiel Natriumhydroxid oder Kaliumhydroxid) in Kombination mit einem gasförmigen Oxidationsmittel (zum Beispiel O₂) in einem Druckkessel behandelt werden (vorzugsweise bei einem pH-Wert von mindestens 9), und zwar gemäß einem exemplarischen Ausführungsbeispiel:
a) bei einer Temperatur zwischen 90°C und 185°C;
b) für eine Inkubationszeit von 45 Minuten bis 270 Minuten;
c) in der Anwesenheit eines cellulosestabilisierenden Additivs (zum Beispiel ein Magnesiumsalz, vorzugsweise Magnesiumsulfat; oder eine chelatbildende Verbindung auf Basis eines Übergangsmetalls, zum Beispiel Ethylendiamintetraessigsäure (EDTA)), vorzugsweise in einer Konzentration in einem Bereich zwischen 0,01 Gewichtsprozent und 5 Gewichtsprozent bezogen auf die zugeführten Fasern;
d) bei einer Alkali-Konzentration in einem Bereich zwischen 1 Gewichtsprozent und 35 Gewichtsprozent bezogen auf die zugeführten Fasern;
e) bei einem initialen Gasdruck in einem Bereich von 1 bar bis 21 bar (entsprechend ungefähr 0,1 MPa bis ungefähr 2,1 MPa).

Der erzeugte Zellstoff kann dann einer Waschprozedur unterzogen werden.

Gemäß einem Ausführungsbeispiel kann das chemische Abtrennen ein Umwandeln von zumindest einem Teil der nicht-cellulosischen Fasern in lösliche, insbesondere wasserlösliche Substanzen, ein Lösen der löslichen Substanzen in einem Lösungsmittel, insbesondere einem wässrigen Lösungsmittel, und ein Abtrennen, insbesondere Abfiltrieren, nicht gelöster cellulosischer Fasern von den gelösten Substanzen aufweisen. Somit können die verschiedenen Fasern einem (zum Beispiel wässrigen) Lösungsmittel zugeführt werden, in dem sich nur nicht-cellulosische Fasern ausgeprägt lösen. Die sich nicht oder nicht nennenswert oder schwächer lösenden Fasern (insbesondere Cellulosefasern) können abfiltriert oder abzentrifugiert werden und können dann getrennt von den gelösten Fasern weiterverarbeitet werden.

Gemäß einem weiteren Ausführungsbeispiel wird der Koch-Prozess derart durchgeführt, dass der Polymerisationsgrad der Cellulose des Ausgangsstoffs innerhalb eines vordefinierten Bereichs ist. Dies hat den Vorteil, dass besonders hochwertige Cellulose für die Papierherstellung bereitgestellt werden kann.

Ein teilweises Abbauen der Cellulosefasern in chemischem Milieu kann vorteilhaft durch Beeinflussung der chemischen Umgebung so gesteuert werden, dass ein resultierender Polymerisationsgrad der Cellulose innerhalb eines gewünschten Bereichs liegt. Insbesondere kann die Kochung in einem möglichst kurzen Zeitrahmen durchgeführt werden, so dass eine möglichst geringe Reduktion des Polymerisationsgrades der Cellulose stattfindet.

Gemäß einem weiteren Ausführungsbeispiel weist das Abreichern ferner auf: Zuführen eines Oxidationsmittels, insbesondere Sauerstoff, in den Koch-Prozess. Dies hat den Vorteil, dass das Verfahren besonders zeitsparend und zugleich effizient durchgeführt werden kann, denn ein zusätzlicher Bleich-Prozess ist nicht mehr notwendig. Es hat sich herausgestellt, dass ein (gasförmiges) Oxidationsmittel, welches dem alkalischen Koch-Prozess zugeführt wird, zu einer besonderen Helligkeit des abgereicherten Ausgangsstoffs (und damit auch des Papierstoffs) führt. Somit kann z.B. eine ISO Helligkeit von 90% oder mehr für den Papierstoff noch während des Koch-Prozesses erreicht werden, ohne dass ein zusätzlicher Bleich-Prozess notwendig ist.

Gemäß einem weiteren Ausführungsbeispiel weist das Abreichern ferner auf: Steuern der Prozessparameter derart, dass der Polymerisationsgrad der Cellulose des abgereicherten Ausgangsstoffs im Wesentlichen in einem vordefinierten Bereich ist. Die Cellulose weist dann insbesondere einen durchschnittlichen Polymerisationsgrad von 200 Monomeren oder mehr, insbesondere 300 Monomeren oder mehr, weiter insbesondere 500 Monomere oder mehr, auf. Weiter insbesondere weist die Cellulose 10% oder weniger Cellulose mit einem durchschnittlichen Polymerisationsgrad in dem Bereich 50 bis 200 Monomere auf. Dies hat den Vorteil, dass besonders hochwertige Cellulose für die Papierherstellung bereitgestellt werden kann.

Wie oben bereits beschrieben, ist für den Recycling-Prozess eine Cellulose mit langen Ketten, also einem hohen durchschnittlichen Polymerisationsgrad, besonders vorteilhaft. Ein Nachteil des Recyclings ist das Verkürzen der Kettenlänge über mehrere Recycling-Zyklen hinweg. Dieser Nachteil kann dadurch überwunden werden, dass Alttextilien als Cellulosequelle verwendet werden, welche naturgemäß Cellulose mit einer sehr langen Kettenlänge aufweisen. So hat z.B. Baumwolle einen durchschnittlichen Polymerisationsgrad von etwa 3000. In dem Abreicherungsprozess wird nun versucht, Cellulose mit einem möglichst hohen durchschnittlichen Polymerisationsgrad bereitzustellen. Die Prozessparameter können entsprechend gesteuert werden. Beispielsweise wird der Koch-Prozess so durchgeführt, dass möglichst kein bzw. ein sehr geringer Abbau der Cellulose Polymere erfolgt (z.B. durch verkürzte Kochzeiten, geringer Temperatur, Cellulose-stabilisierenden Wirkstoffe...). Ferner kann der Alttextil Mix gezielt so zusammengestellt werden, dass möglichst viel hochwertige Baumwolle darin enthalten ist.

Gemäß einem weiteren Ausführungsbeispiel weist das Abreichern ferner auf: Abreichern (insbesondere selektives Abreichern) von Cellulose, deren Polymerisationsgrad von einem vordefinierten Intervall abweicht. Insbesondere weist die Cellulose einen durchschnittlichen Polymerisationsgrad von 200 Monomeren oder mehr, weiter insbesondere 300 Monomeren oder mehr, weiter insbesondere 500 Monomeren oder mehr, auf. Die Cellulose weist 10% oder weniger Cellulose mit einem durchschnittlichen Polymerisationsgrad in dem Bereich 50 bis 200 Monomere auf. Dies hat den Vorteil, dass besonders hochwertige Cellulose für die Papierherstellung bereitgestellt werden kann.

Bei dem selektiven Abreichern kann Cellulose mit einer kurzen Kettenlänge bewusst dem Ausgangsstoff entzogen werden, so dass die Cellulose des Ausgangsstoffes einen durchschnittlichen Polymerisationsgrad in einem vordefinierten Bereich aufweist. Beispielsweise kann eine mechanische Trennung z.B. eine Größentrennung (Abfiltrieren von Cellulosefeinstoff), durchgeführt werden, um die kürzeren (leichteren) Cellulose Polymere von den längeren (schwereren) Cellulose Polymeren abzutrennen.

Gemäß einem weiteren Ausführungsbeispiel weist das Verfahren ferner auf: Mischen des abgereicherten Ausgangsstoffs mit einem weiteren Ausgangsstoff zum Erhalten eines gemischten Ausgangsstoffs. Dies insbesondere derart, dass der gemischte Ausgangsstoff vordefinierte Eigenschaften aufweist. Dies hat den Vorteil, dass Eigenschaften des abgereicherten Ausgangsstoffs, und damit auch des herzustellenden Papierstoffes, gezielt und auf einfache Weise gesteuert werden können.

Der weitere Ausgangsstoff kann ebenfalls Alttextilien aufweisen oder kann ein zusätzlicher Stoff wie Cellulose, (Papier-)Zellstoff, Altpapier, Kunststoff, oder ein anderer Fremdstoff sein. Der weitere Ausgangsstoff kann während des Abreicherns mit dem Ausgangsstoff gemischt werden (z.B. während eines Koch-Prozesses), kann aber auch vor dem Abreichern oder nach dem Abreichern mit dem Ausgangsstoff gemischt werden. Der weitere Ausgangsstoff kann dieselbe Zusammensetzung aufweisen wie der Ausgangsstoff oder eine andere. Bevorzugt hat der weitere Ausgangsstoff eine vordefinierte Zusammensetzung, so dass gezielt erwünschte Eigenschaften in dem gemischten Ausgangsstoff bzw. in dem herzustellenden Papierstoff hervorgerufen werden. Beispielsweise kann der weitere Ausgangsstoff hochwertige Cellulose enthalten, so dass der Papierstoff besondere lange Cellulose Polymere aufweist. Weiterhin kann der weitere Ausgangsstoff z.B. Elastan aufweisen, welches in dem Papierstoff für ein verbessertes Ölbindevermögen sorgen könnte. Der weitere Ausgangsstoff kann also gezielt die Zusammensetzung des Papierstoffs beeinflussen.

In einem Ausführungsbeispiel wird in dem Ausgangsstoff durch selektive Abreicherung der vorhandenen Restkunstoffe ein gewünschter Anteil dieser Kunststoffe (z.B. PET und/oder PUR) eingestellt. Der aufbereitete Ausgangsstoff wird dann mit einem weiteren Ausgangsstoff (z.B. Cellulose oder eine Alttextil-Mischung) mit anderer Zusammensetzung vermischt, wodurch die endgültigen Eigenschaften des verfahrensgemässen Papierproduktes massgeblich gesteuert werden, bzw. eingestellt werden können.

In einem Ausführungsbeispiel werden verschiedene Alttextil-Mischungen von unterschiedlicher Zusammensetzung derart gemischt, dass sich gewünschte Anteile unterschiedlicher Kunststoffe ergeben. Diese chemiereduzierte/chemiefreie Ausführungsvariante (nur durch Mischung von Ausgangsstoffen erreicht) ist vom Ressourcenverbrauch und aufgrund von ökologischen Aspekten her interessant. Die erfindungsgemäss aus einer derartigen Mischung hergestellten papierartigen Produkte sind so trotz variabler Qualität der Ausgangsstoffe von konstanter Qualität in Bezug auf die resultierenden Endeigenschaften.

Gemäß einem weiteren Ausführungsbeispiel weist das Verfahren ferner auf: teilweises Abreichern (insbesondere selektives Abreichern) der nicht-cellulosischen Fremdstoffe von der Cellulose derart, dass zumindest ein vordefinierter synthetische Kunststoff in dem abgereicherten Ausgangsstoff zumindest teilweise verbleibt (insbesondere derart, dass der gebildete Papierstoff vordefinierte Eigenschaften aufweist). Dies hat den Vorteil, dass Eigenschaften des abgereicherten Ausgangsstoffes, und damit auch des herzustellenden Papierstoffes, gezielt und auf einfache Weise gesteuert werden können, während gleichzeitig der Abreicherungsprozess weniger komplex aufgeführt werden kann.

Gemäß einem weiteren Ausführungsbeispiel weist der zumindest teilweise in dem abgereicherten Ausgangsstoff verbleibende vordefinierte synthetische Kunststoff PUR, insbesondere Elastan, auf. Dies hat den Vorteil, dass positive Eigenschaften wie ein erhöhtes Ölbindevermögen ohne zusätzliche Aufwendungen erhalten werden und gleichzeitig der Abreicherungsprozess vereinfacht wird.

Für die Herstellung von papierähnlichen Produkten können Recyclingmaterialien bei der Zellstoffherstellung verwendet werden, welche aus einem nicht papierbasierenden Recyclingkreislauf stammen, wie z.B. Alttextilen. Bei der Aufbereitung dieser Recyclingmaterialien (Textilrecycling) fallen bei der Schliessung eines Stoffkreislaufes verschiedene unerwünschte Fremdstoffe an, welche bei der Herstellung einer Faser entfernt werden müssen, damit die technisch/physikalischen Eigenschaften gegenüber einer nicht-recycelten Faser genügend ähnlich werden. Normalerweise werden solche Fremdstoffe, insbesondere Polyurethane, möglichst vollständig eliminiert.

Erstaunlicherweise wurde nun gefunden, dass durch gezielte Steuerung von Restkonzentrationen im Rahmen des Aufbereitungsverfahrens (also der Aufbereitung der Alttextilien) neue Eigenschaften im der resultierenden Cellulose bzw. dessen Binder-basierenden Folgeprodukten erreicht werden können. Diese so erreichte Funktionalisierung und/oder Abreicherung von Restbestandteilen aus dem Rezyklat, welche auf der Steuerung der Umwandlung von thermoplastischen Kunststoffen basieren, erlauben eine Überkompensation der sich sonst in der Papierherstellung ergebenden Faserlängenproblematik (bzw. der damit einhergehenden Festigkeitsproblematik) aus dem reinen Papierrecycling.

Insbesondere lassen sich durch einen gezielten Anteil von Residualpolymeren (bevorzugt Polyurethane, wie z.B. Elastan) eine Kompensation (Erhöhung durch den Elastananteil, Reduktion durch Altcellulose) Festigkeitswerte erreichen, welche normalerweise durch Beimischung von rezyklierter Cellulose deutlich vermindert wären, da mit dem Recyclingprozess eine Reduktion der mittleren Kettenlänge einhergeht.

Bei höheren Temperaturen (welche z.B. in der Papierherstellung bereits durch das Trocknen erreicht werden können) wird der Thermoplasteffekt des Elastans (bzw. TPEs) nutzbar: Dies führt bildhaft gesprochen zu einer gewissen steuerbaren Klebrigkeit im Bereich zwischen der Cellulosefasern und/oder in Interaktion mit Bindern, was sich für thermoplastische Hafteffekte entsprechend nutzen lässt.

Durch die erfindungsgemässe Aufbereitung des Ausgangsstoffes wird sichergestellt, dass die verbleibenden Restpolymere aus z.B. PU, PA, Polyester usw. in der geeigneten Konzentration für eine Binder-basierende Weiterverarbeitung verbleiben. Wenn dies erreicht wird, wirken die sich in einer Pulpe befindlichen Kunststoffanteile ähnlich einem Verbundsystem Faser-Thermoplast aus.

In einem weiteren Ausführungsbeispiel werden (Rest-)Polymere aus Alttextilien als Haftungsverstärker unter den Cellulosefasern oder als thermoplastische Eigenschaftsverstärker im Rahmen des Herstellungsprozesses eines Papierprodukts (z.B. ein papierartiges Flachmaterial) verwendet. Diese Verwendung als Heisskleber und/oder Binderinteraktion und/oder Hemicellulose-Ersatz basiert beispielhaft auf in den Alttextilien vorkommenden Stoffanteilen. Beispielsweise in bügelfreien Hemden sind diese Stoffe und vorprozessierte Cellulose-Komponenten im Wesentlichen inert, bis zur Fertigstellung eines bestimmten Schrittes im Produktionsprozess. Insbesondere lässt sich so eine nachträgliche Versteifung eines Nachfolgeproduktes durch Wärme (analog Heissleim) erreichen. Zur Herstellung von Verbundstoffen, welche die Eigenschaft einer hohen Formstabilität haben (z.B. plissierte Papierfilter), wird üblicherweise ein aufwendiges Verfahren eingesetzt, das sonst in der textilen Industrie verwendet wird: Durch die Kombination sehr aufwendiger chemischer Verfahren, wie der Behandlung mit Flüssigammoniak. Sie lässt das Hemd lange Zeit wie neu aussehen. Noch wichtiger ist die sogenannte "Feuchtvernetzung", bei der zwischen den Molekülen der Baumwollcellulose eine elastische Brücke gebaut wird. Diese Brücke zieht den Stoff nach dem Waschen wieder in Form. Die Feuchtvernetzung mit "Kunstharzen" verlangt eine sehr präzise Arbeitsweise.

Durch die gezielte Steuerung des Anteils von Restkunststoffen (wie z.B. Elastan aus Alttextilien) lässt sich eine gewisse Thermoplastzität des resultierenden Verbundmaterials erzielen, welche den entsprechenden Anteil von Restkunststoffen aus den Alttextilien über den erfindungsgemässen Abreicherungs- und Rekombinationsprozessen über die neu implizierten Eigenschaften der erfindungsgemässen Cellulose zu neuen Eigenschaften bei einem Verbundmaterial führen.

Gemäß einem weiteren Ausführungsbeispiel weist das Abreichern des Verfahrens ferner auf: zumindest teilweises Behalten eines synthetischen Kunststoffs in dem Ausgangsstoff. Hierbei kann der synthetische Kunststoff insbesondere einer aus der Gruppe sein, welche besteht aus Polyamid, Polyester, Polyurethan und Elastan. Dies kann den Vorteil haben, dass ein synthetischer Kunststoff nicht mehr besonders sauber bzw. rein abgereichert werden muss. Das Abreichern von kleinen Restkonzentrationen kann nämlich technisch durchaus herausfordernd und ressourcenintensiv sein kann.

Stattdessen kann synthetischer Kunststoff, z.B. Polyurethan, in dem Ausgangsstoff verbleiben, wodurch aufwendige und kostenintensive Abreicherungsprozesse verringert werden können bzw. gar nicht mehr notwendig sind. Wenn zumindest ein Teil des Polyurethans Elastan zugeordnet ist, können zusätzlich noch weitere Vorteile erreicht werden, wie z.B. eine Verbesserung der Festigkeitswerte und/oder der Elastizität des herzustellenden Formkörpers.

Es können geringe Anteile (z.B. unter 2%) von z.B. Polyamiden und Polyestern in dem Recycling-Verfahren mitverarbeitet werden, um eine gute Einbindung in Cellulose zu erreichen. In einem Recycling-Verfahren kann dies ein deutlicher Vorteil sein, denn das zumindest teilweise Entfernen von weiteren synthetischen Polymeren, insbesondere in geringen Konzentrationen, kann unverhältnismäßig aufwändig sein. Die oben genannten weiteren synthetischen Kunststoffe können in Ausgangsstoffen wie Textilien sehr häufig und verbreitet enthalten sein. Daher stellt eine Akzeptanz geringer Restmengen eine massive Erleichterung eines Recycling-Verfahrens dar.

Gemäß einem weiteren Ausführungsbeispiel weisen die Alttextilien einen ersten synthetischen Kunststoff auf, insbesondere Polyamid und/oder Polyurethan. Die Alttextilien weisen auch einen zweiten synthetischen Kunststoff auf, insbesondere Polyester, weiter insbesondere Polyethylenterephthalat (PET). Zudem weist das Abreichern ferner auf: i) zumindest teilweises Abreichern von dem ersten synthetischen Kunststoff auf einen ersten Konzentrationswert, ii) zumindest teilweises Abreichern von dem zweiten synthetischen Kunststoff auf einen zweiten Konzentrationswert. Hierbei ist nun der erste Konzentrationswert von dem zweiten Konzentrationswert verschieden, insbesondere größer. Dies hat den Vorteil, dass das technisch aufwendige und kostenintensive Abreichern eines weiteren Kunststoffs zumindest teilweise entfällt. Stattdessen kann die Anwesenheit zumindest eines weiteren synthetischen Kunststoffs sogar die Eigenschaften des herzustellenden Papierstoffes in vorteilhafter Weise beeinflussen bzw. steuern.

Gemäß einem weiteren Ausführungsbeispiel weist das Abreichern ferner auf: zumindest teilweises (selektives) Behalten von Metalloxiden, insbesondere Titandioxid, derart, dass diese als Oxidationskatalysator für organische Verunreinigungen wirken können. Dies hat den Vorteil, dass auf einfach steuerbare Weise (Rest-)Verunreinigungen beseitigt werden können, welche ansonsten kaum entfernbar wären.

Metalloxide wie Titandioxid, in der Regel in sehr feiner Verteilung, können z.B. in Zusammenhang mit UV-Licht (Freianwendung), als Oxidationskatalysator zum Abbau von organischen Verunreinigungen, insbesondere welche -OH, -O, COOR, -C=C-, Gruppen enthalten, wirken. Beispiele für solche organischen Verunreinigungen können sein: Öle, Fette, Lösemittel, Salben, Glykole (Frostschutzmittel), Biodiesel. Diese Oxidationskatalyse kann, insbesondere bei geringen Kontaminationsbelastung, zu Vorteilen führen.

Gemäß einem weiteren Ausführungsbeispiel wird ein Verwenden beschrieben von Metalloxiden (insbesondere Titandioxid) als Oxidationskatalysator (insbesondre im Zusammenhang mit UV-Licht) von organischen Verunreinigungen in einem abgereicherten Ausgangsstoff und/oder einem Papierstoff.

Gemäß einem weiteren Ausführungsbeispiel weist das Verfahren weiterhin auf: teilweises (insbesondere selektives) Abreichern der nicht-cellulosischen Fremdstoffe von der Cellulose derart, dass intrinsische Fremdstoffe (insbesondere Metalloxide, weiter insbesondere Pigmente) in dem abgereicherten Ausgangsstoff verbleiben. Dies hat den Vorteil, dass ein effizientes Codieren (Fingerprint) des Papierstoffes ohne zusätzliche Aufwendungen ermöglicht ist.

Gemäß einem weiteren Ausführungsbeispiel weist das Abreichern ferner auf: (im Wesentlichen) vollständiges Abreichern der intrinsischen nicht-cellulosischen Fremdstoffe (insbesondere der synthetischen Fasern) von der Cellulose derart, dass hochreine Cellulosefasern als abgereicherter Ausgangsstoff bereitgestellt werden. Dies hat den Vorteil, dass hochreine Cellulose für die Papierherstellung auf einfache Weise aus einem Rohstoff (nämlich Alttextilien) gewonnen werden kann, welcher in großer Menge und kostengünstig vorliegt.

Der Begriff "vollständiges Entfernen" bezieht sich in diesem Zusammenhang darauf, dass versucht wird möglichst alle Fremdstoffe zu entfernen. In anderen Worten: es sollen keine Fremdstoffe behalten werden. Dem Fachmann ist klar, dass ein vollständiges Abreichern jeglicher Fremdstoffe technisch äussert schwierig ist, da Verschmutzungen in Kleinstmengen verbleiben können. Aus diesem Grund wird die Formulierung "im Wesentlichen" gewählt, wobei dies so verstanden werden kann, dass ein vollständiges Entfernen (soweit technisch realisierbar) erwünscht ist.

Gemäß einem weiteren Ausführungsbeispiel weist das Verfahren ferner auf: i) Zuführen des abgereicherten Ausgangsstoffs (insbesondere als wässrige Cellulose Suspension) zu einer Pulpe, und Bilden des cellulosischen Papierstoffs aus der Pulpe. Dies hat den Vorteil, dass der abgereicherte Ausgangsstoff besonders effizient und unter Einsatz erprobter Techniken in den cellulosischen Papierstoff umgewandelt werden kann.

Unter dem Begriff "Pulpe" kann in diesem Zusammenhang das bei der typischen Papierherstellung vorhandene Gemenge aus Wasser, Cellulose und Binder, aus welchem das Papier hergestellt wird, verstanden werden. Zur Vereinfachung wird im Rahmen dieses Dokuments unter "Pulpe" jede Form von wässrigen Zwischenlösungen verstanden, welche einen Anteil an Cellulose und einem Binder enthält. Als Binder können auch nichttypische Papierbinder zum Einsatz kommen.

In einem Ausführungsbeispiel wird das im Abreicherungsprozess der Alttextilien erhalte wässrige Zwischenprodukt nicht zur üblichen Trockencelluloseform abgetrocknet, sondern auch im noch nicht dehydrierten Zustand weiterverarbeitet, was zum Beispiel die Mischung von wässrigen Cellulose Suspensionen für einen Flüssigkeitsstrom erlaubt, der der Pulpengenerierung zugeführt wird.

Gemäß einem exemplarischen Ausführungsbeispiel wird es durch das oben beschriebene Verfahren zum Selektieren von Alttextilien ermöglicht, einen effizienten Aufschluss der Rohrezyklate (Alttextilien) zu machen: Der Alttextilien-Anteil, welcher die qualitativ beste Recycling-Cellulose ergibt, kann für textilnahe Produktionsprozesse verwendet werden, während derjenige Alttextilien-Anteil, welcher nicht ideal für diese Qualitätsstufen geeignet ist, für die Papierherstellung verwendet wird. Das Qualitätskriterion kann hierbei z.B. der durchschnittliche Polymerisationsgrad der Cellulose sein, wobei ein hoher durchschnittlicher Polymerisationsgrad eine hohe Qualität darstellen kann. Die Selektion kann während eines Abreicherungsprozesses stattfinden oder kann bereits an der Alttextilien-Mischung durchgeführt werden.

Der Alttextilien-Anteil, welcher für die Kleiderherstellung selektiert wurde, kann z.B. einem Lyocellverfahren oder einem Viskoseverfahren (insbesondere einem Xanthogenatverfahren, einem Carbamatverfahren, oder einem Kaltalkaliverfahren) zugeführt werden.

Im Rahmen dieses Dokuments kann unter dem Begriff "Lyocell-Verfahren" insbesondere ein Verfahren zum Herstellen von Cellulose nach einem Direkt-Lösemittelverfahren verstanden werden. Die Cellulose kann für das Lyocell-Verfahren aus einem Ausgangsstoff gewonnen werden, der diese Cellulose enthält. Der Ausgangsstoff kann bei dem Lyocell-Verfahren in einem geeigneten Lösungsmittel (insbesondere aufweisend tertiäre Aminoxide wie zum Beispiel N-Methylmorpholin-N-oxid (NMMO) und/oder ionische Flüssigkeiten, d.h. niedrig schmelzende Salze, die aus Kationen und Anionen aufgebaut sind) gelöst werden. Das Lösen kann insbesondere durch Wasserentzug und/oder ohne chemische Modifizierung erfolgen. Die erhaltene Lösung, die auch als Dope oder Spinnlösung bezeichnet werden kann, kann bei dem Lyocell-Verfahren anschließend durch eine oder mehrere Spinndüsen gepresst werden. Dadurch gebildete Filamente können während und/oder nach ihrem freien oder gesteuertem Fallen durch einen Luftspalt in einem wasserhaltigen Bad (insbesondere in einem Bad mit wässriger NMMO-Lösung) und/oder in dem Luftspalt befindliche Luftfeuchtigkeit ausgefällt werden.

Im Rahmen dieses Dokuments kann unter dem Begriff "Viskoseverfahren" insbesondere ein Verfahren zum Herstellen von Cellulose nach einem Nassspinnverfahren verstanden werden. Die Cellulose kann für das Viskoseverfahren aus einem Ausgangsstoff (insbesondere Holz oder ein Holzzellstoff) gewonnen werden, der diese Cellulose enthält.

Im Rahmen dieses Dokuments kann unter dem Begriff "Viskoseverfahren" ein Xanthogenatverfahren verstanden werden. In aufeinanderfolgenden Prozessstufen kann bei dem Viskoseverfahren, welches als Xanthogenatverfahren durchgeführt wird, der Ausgangsstoff zuerst mit einer Base (zum Beispiel mit Natronlauge) behandelt werden, wodurch sich Alkalicellulose bildet. Bei einer anschließenden Umsetzung dieser Alkalicellulose mit Schwefelkohlenstoff bildet sich Cellulose-Xanthogenat. Daraus kann durch weitere Zugabe einer Base (insbesondere von Natronlauge) eine Viskose-Spinnlösung erzeugt werden, die durch eine oder mehrere Spinndüsen gepresst werden kann. In einem Spinnbad entstehen durch Koagulation Viskose-Filamente. Die so hergestellten Viskose-Filamente werden im Anschluss z.B. zu Viskose-Stapelfasern geschnitten.

Im Rahmen dieses Dokuments kann unter dem Begriff "Viskoseverfahren" auch ein Carbamatverfahren verstanden werden, bei welchem anstelle von Schwefelkohlenstoff Ammoniak zur Herstellung eines löslichen Cellulosederivates eingesetzt wird. Dabei entsteht anstelle des Cellulose-Xanthogenats das sogenannte Cellulose-Carbamat. Analog der Weiterverwendung des Cellulose-Xanthogenats wird aus dem Cellulose-Carbamat eine spinnfähige Lösung hergestellt, aus welcher, nach dem Pressen durch eine oder mehrere Spinndüsen, in einem Spinnbad Cellulose-Filamente regeneriert werden können.

Weiter kann im Rahmen dieses Dokuments unter dem Begriff "Viskoseverfahren" auch ein Kaltalkaliverfahren verstanden werden, bei welchem Cellulose ohne weitere Derivatisierung zum Xanthogenat oder Carbamat in einem temperierten, insbesondere gekühlten, wässrigen alkalischen Medium in Lösung gebracht wird.

Die Temperatur des wässrigen alkalischen Mediums beträgt in einem Ausführungsbeispiel weniger als 20° C, insbesondere auch weniger als 5° C. Zur Verbesserung des Löseverhaltens können dem wässrigen alkalischen Medium Zusätze wie z.B. Harnstoff, Thioharnstoff, Zinkoxid, Polyethylenglykol oder Tenside beigefügt werden. Wiederum werden aus der Cellulose enthaltenden Spinnlösung, nach dem Durchtritt durch eine oder mehrere Spinndüsen, mittels Fällung in einem sauren oder alkalischen Spinnbad Cellulose-Filamente regeneriert.

Gemäß einem exemplarischen Ausführungsbeispiel kann die oben beschriebene Codierung eine zuverlässige Qualität von Cellulose aufweisenden Papierstoffen sicherzustellen.

Im Rahmen dieser Anmeldung können unter dem Begriff "Bestandteile des Papierstoffes" insbesondere unterschiedliche Materialien bzw. Komponenten oder Konstituenten des Cellulose-aufweisenden Papierstoffes bzw. des daraus resultierenden Papierprodukts verstanden werden, die messtechnisch unterscheidbar sind. In diesem Zusammenhang bezeichnet der Begriff "Papierstoff" also sowohl den Ausgangsstoff (das Vorprodukt) als auch das zu erzeugende Papierprodukt. Die Bestandteile des Papierstoffes können einerseits von einem Ausgangsstoff zum Herstellen des Papierstoffes abhängen und können andererseits von einem Verfahren zum Herstellen des Papierstoffes abhängen. Die Kombination der Bestandteile und deren Mengen eines Papierstoffes können daher indikativ sein für einen ganz bestimmten Papierstoff oder eine ganz bestimmte Charge des Papierstoffes, das auf der Basis bestimmter Ausgangsstoffe mit einem bestimmten Verfahren hergestellt worden ist. Ein solcher Bestandteil kann zum Beispiel ein Hauptbestandteil des Papierstoffes sein (zum Beispiel Cellulose, die in unterschiedlichen Fasergeometrien auftreten kann und die aufgrund unterschiedlicher Produktzusammensetzungen der verwendeten Cellulosequellen auch spektroskopisch unterscheidbar sein kann (zum Beispiel mittels Kristallinitätsbestimmung via NMR). Ein solcher Bestandteil kann aber auch ein Fremdstoff sein, der als Ergebnis der Verwendung bestimmter Ausgangsstoffe bzw. Cellulosequellen auch im Endprodukt enthalten ist (beispielsweise Polyester bzw. Elastan im Falle der Wiederverwertung von Alttextilien). Ein Bestandteil kann auch ein Spurenelement sein, das auf eine Cellulosequelle bzw. einen Ausgangsstoff zurückgeht (zum Beispiel Titandioxid oder ein Seltenerdmetall). Diese können mit verschiedenen analytischen Methoden, z.B. Massenspektrometrie, erfasst werden. Darüber hinaus ist es auch möglich, dass ein Bestandteil des Papierstoffes analysiert wird, der im Ausgangsstoff bzw. der Cellulosequelle noch nicht enthalten war, sondern erst während oder nach Herstellung der Cellulosefasern oder eines anderen cellulosischen Formkörpers dem Papierstoffes hinzugefügt wurde, beispielsweise ein Farbstoffmarker.

Im Rahmen dieser Anmeldung können unter dem Begriff "Datensatz" insbesondere (zum Beispiel elektronisch speicherbare) Daten verstanden werden, deren Dateninhalt für mehrere Bestandteile deren Vorhandensein bzw. Nichtvorhandensein in einem Papierstoff bzw. dem daraus hergestellten Papierprodukt oder sogar deren Menge in dem Papierstoff angibt. Zum Beispiel kann der Datensatz eine Abfolge von logischen Werten "1" und logischen Werten "0" aufweisen, mithin einen Binärcode bzw. eine Bitfolge, der bzw. die bezogen auf einen bestimmten Papierstoff die Erfüllung oder Nichterfüllung eines jeweiligen Kriteriums angibt, das im Zusammenhang mit einem bestimmten Bestandteil steht. Zum Beispiel kann 1 Bit eines solchen Datensatzes angeben, ob ein Papierstoff eine Konzentration eines Metalloxids oberhalb (entsprechend einem logischen Wert "1") oder unterhalb (entsprechend einem logischen Wert "0") eines vorgegebenen Schwellwerts hat. Auf diese Weise kann mit einer kompakten Datenstruktur ein Fingerabdruck eines bestimmten Papierstoffes auf Basis seiner Bestandteile dargestellt werden.

Im Rahmen dieser Anmeldung kann unter dem Begriff "Datenbank" insbesondere eine Gesamtheit von Datensätzen (die zum Beispiel auf einem Datenspeicher, weiter insbesondere einem elektronischen Massenspeicher (zum Beispiel einer Festplatte) gespeichert sein können), verstanden werden. Eine solche Datenbank kann lokal bei einer Apparatur zum Herstellen von Papierstoffen oder auch an entfernter Stelle angeordnet sein, zum Beispiel Cloud-basiert sein.

Gemäß einem exemplarischen Ausführungsbeispiel der Erfindung ist ein Codiersystem für Papierstoffe geschaffen, bei dem nach dem Herstellen eines solchen Produkts messtechnisch Informationen zu vorzugsweise mehreren Bestandteilen dieses speziellen Papierstoffes erfasst werden und als Datensatz abgespeichert werden. Diese Datensatz kann diesem speziellen Papierstoff zugeordnet werden. Diese Prozedur kann für viele Papierstoffe wiederholt werden. Der Datensatz für einen bestimmten Papierstoff hängt maßgeblich von den Ausgangsstoffen (zum Beispiel Holz, Reste aus der Kleiderherstellung, Altkleider, natürliche Baumwolle, etc.) zum Herstellen des Papierstoffes sowie vom verwendeten Herstellungsverfahren ab. Wenn zum Beispiel als Ausgangsstoffe ganz oder teilweise zu recycelnde inhomogene Mischtextile zum Einsatz kommen, deren Materialzusammensetzung für unterschiedliche Chargen stark schwankt, so kann für jeden Papierstoff ein individueller Fingerabdruck der Ausgangsstoffe und des Herstellungsverfahrens in Form des Datensatzes abgespeichert werden. Ein Textil kann hier insbesondere ein verarbeitetes Faserprodukt sein. Ein Mischtextil kann dementsprechend als inhomogenes Faserprodukt bezeichnet werden. Soll später, zum Beispiel aus Gründen der Qualitätssicherung, die Originalität eines bestimmten Testprodukts überprüft werden, können dieselben Parameter abermals messtechnisch erfasst werden und eine beste Übereinstimmung (zum Beispiel im Sinne eines Best-Match-Verfahrens) zwischen den erfassten Parameterwerten des Testprodukts und einem der abgespeicherten Datensätze gesucht werden. In dem einem bestimmten Papierstoff zugeordneten Datensatz ist damit die Produktidentität codiert. Indem gemäß einem exemplarischen Ausführungsbeispiel eine Mehrzahl von Bestandteilen in den zugehörigen Datensatz eingeht, kann die Wahrscheinlichkeit für einen falschen Treffer (d.h. ein Produkt wird irrtümlich einem falschen Datensatz zugeordnet) stark reduziert werden. Ferner ist es auf effiziente und robuste Weise ermöglicht, Papierstoff/Papierprodukte, welche aus Alttextilien hergestellt wurden, von Papierstoff/Papierprodukten zu unterscheiden, welche aus Holz und/oder Altpapier hergestellt wurden.

Besonders vorteilhaft ist es, eine Kombination aus mehreren intrinsischen nicht-cellulosischen Bestandteilen eines aus wiederverwerteten Alttextilien hergestellten Papierstoffes als Fingerabdruck (Datensatz) in einer Datenbank abzuspeichern und bedarfsweise mit einem Testprodukt abzugleichen. Unter einem intrinsischen Bestandteil kann in diesem Zusammenhang insbesondere ein Bestandteil des Papierstoffes verstanden werden, der als Ergebnis eines hierfür verwendeten Ausgangsstoffs (bevorzugt Alttextilien) und eines verwendeten Herstellungsverfahrens ohne zusätzliche Maßnahme zwangsläufig in dem finalen Papierstoff enthalten ist. Dadurch ist der Datensatz praktisch ohne Zusatzaufwand generierbar, da der als Marker verwendete Bestandteil dem Papierstoff nicht zwingend separat beigefügt werden muss, und dennoch spezifisch indikativ für einen ganz speziellen Papierstoff sein kann (da bei Alttextilien von inhomogenen Mischtextilien ausgegangen werden kann). Indem als analysierte Bestandteile gerade nicht oder zumindest nicht nur die Cellulose selbst verwendet wird, sondern zumindest auch aus den Alttextilien stammende nicht-cellulosische Fremdstoffe, kann ein ganz besonders spezifischer bzw. individueller Datensatz für einen bestimmten Papierstoff abgespeichert und mit Testprodukten abgeglichen werden. Auf diese Weise ist es möglich, eine zuverlässige Qualität von Papierstoffen sicherzustellen, indem die Herkunft aus einem Wiederverwertungsverfahren verifiziert und Fälschungen oder Plagiate zuverlässig identifiziert werden können.

Gemäß einem exemplarischen Ausführungsbeispiel wird der Papierstoff auf Basis von Altkleidern als Cellulosequelle als zumindest Teil eines Ausgangsstoffs hergestellt; und/oder der Papierstoff wird auf Basis von Resten aus einer Kleidungsherstellung als Cellulosequelle als zumindest Teil eines Ausgangsstoffs hergestellt. Dies hat den Vorteil, dass sowohl eine bestimmte Charge aus der Kleiderproduktion als auch ein bestimmter Altkleider-Mix zuverlässig identifiziert werden kann.

Gemäß einem exemplarischen Ausführungsbeispiel weisen die intrinsischen nicht-cellulosischen Bestandteile zumindest einen aus einer Gruppe auf, die besteht aus einem Spurenelement, insbesondere einem Metall, weiter insbesondere einem Seltenerdmetall, einem Metalloxid, insbesondere Titandioxid und/oder Zinkoxid, einem Farbstoff, einem Leuchtstoff, und einem synthetischen Kunststoff, insbesondere Elastan und/oder Polyester.

In einem Ausführungsbeispiel werden die unterschiedlichen nicht-cellulosischen Fremdstoffanteile der Alttextilien, bzw. der daraus gewonnenen Cellulose-Zwischenprodukte, zur Codierung von Informationen verwenden, wie z.B. Herkunft, Charge, Zusammensetzung, Originalitätsnachweis, usw. Insbesondere durch Mischung verschiedener solcher Zellstoffzwischenprodukte können eine Vielzahl von unterschiedlichen Codes dargestellt werden.

Im Folgenden werden exemplarische Ausführungsbeispiele der vorliegenden Erfindung mit Verweis auf die folgende Figur detailliert beschrieben.

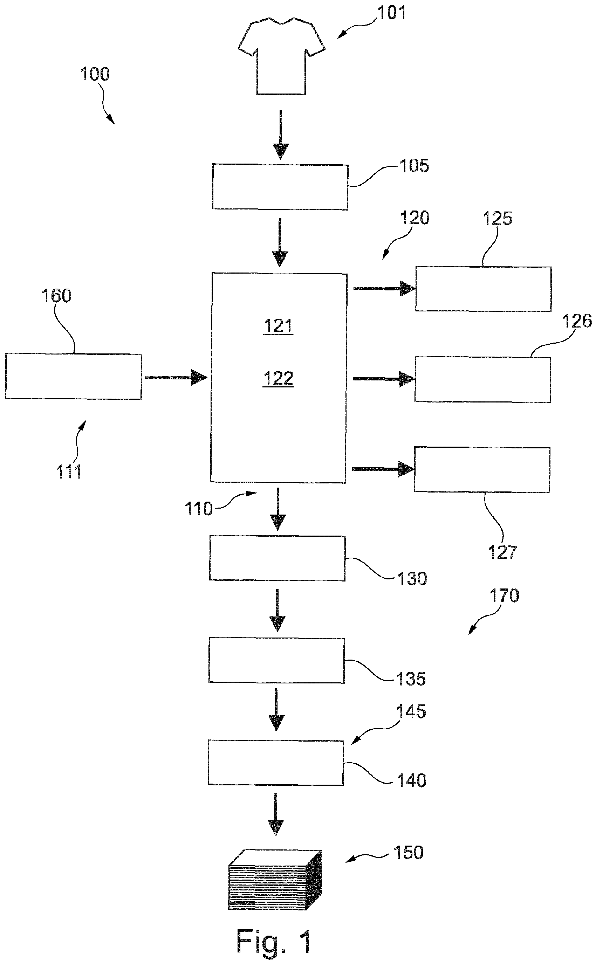

Figur 1 zeigt ein Flussdiagramm eines Verfahrens zum Herstellen eines cellulosischen Papierstoffes aus Alttextilien gemäß einem exemplarischen Ausführungsbeispiel der Erfindung.

Bevor bezugnehmend auf die Figur exemplarische Ausführungsbeispiele beschrieben werden, sollen einige grundlegende Überlegungen zusammengefasst werden, basierend auf denen exemplarische Ausführungsbeispiele der Erfindung abgeleitet worden sind.

Gemäß einem exemplarischen Ausführungsbeispiel werden durch geeignete Prozessschritte im Rahmen des Herstellungsprozesses wie folgt die Eigenschaften des aufbereiteten Ausgangsstoffs und damit des mittels eines solchen Zellstoffes hergestellten Papiers beeinflusst: i) kurze Kochdauer in NaOH führt zur weitgehenden Erhaltung der Kettenlänge im resultierenden Zellstoff, ii) Ausschleusung von zu kurzen Kettenlänge aus dem Produktionsprozess, iii) Reduktion von Metalloxiden aus Alttextilien (Bindung, Filterung, usw.), iv) Reduktion von synthetischen Fasern (Polymeren) durch Selektion der Alttextilien (bzw. des Rohrezyklats), v) Steuerung der Kochdauer, Kochtemperatur, usw. Dadurch wird erreicht, dass pro Polymerfasertyp < 5% Anteile im resultierenden Zellstoff vorhanden sind, vi) Ausreagieren und Umwandeln oder Entfernen von Metalloxiden und/oder synthetischen Polymeren durch Zufügung von Sauerstoff im Kochprozess, und vii) durch Steuerung expliziter Prozessparameter (z.B. Expositionsdauer) kann die resultierende mittlere Kettenlänge maximiert werden.

Gemäß einem exemplarischen Ausführungsbeispiel werden bei der Herstellung beider Cellulosevarianten in derselben Produktionsumgebung verschiedene Vorteile möglich: i) Vereinfachung prä-produktiver Schritte, also keine Rückweisung/Lagerung von zu guten oder zu schlechten Rohrezyklaten, sondern lediglich Zuweisung in den entsprechenden Produktionsprozess, ii) Mischung der resultierenden Cellulose zu einer bestimmten Qualität im post-produktiven Kontext, iii) Steuerung der produzierten Cellulosequalität durch Beeinflussung einzelner Prozessschritte.

Gemäß einem exemplarischen Ausführungsbeispiel, sind folgende vorteilhafte Merkmale bislang nicht bekannt: i) dass die aus Rezyklaten (wie Alttextilien) stammenden Fremdstoffe in ihrer Konzentration verändert und/oder utilisiert werden, ii) dass bei der Aufbereitung von Rezyklaten spezielle Massnahmen zur Erreichung bestimmter Kettenlängen getroffen werden, iii) dass die Recyclingfähigkeit/Häufigkeit von Papier(-ähnlichen) Flächenprodukten durch anteilige Verwendung von Alttextilien-Rohrezyklat in der Pulpe erhöht wird, iv) die Nutzung der thermisch induzierten Bindefähigkeit von Polymeren, die im Zellstoff des Rohrezyklats enthalten sind, als Bindemittelreduktor in der Papierindustrie, v) die Kombination von langkettiger Cellulose aus Baumwolle und einem Anteil von Polymerfasern, welche beide Bestandteile des Rohrezyklats sind, zur Erhöhung der Recyclingfähigkeit/Häufigkeit von Papier (-ähnlichen) Flächenprodukten, und vi) Papierherstellung mit einem Zellstoffanteil aus Textilrecycling, der noch einen Restgehalt an Polymeren, insbesondere PUR (Elastan) und Titandioxid (Mattierungsmittel), enthält.

Gemäß einem exemplarischen Ausführungsbeispiel ist man in der Papierindustrie auf der permanenten Suche nach Deinking-Verfahren mit möglichst wenig zusätzlichen aggressiven Chemikalien. Dieses sogenannte Deinking wird im erfindungsgemässen Verfahren implizit erreicht. Durch die Kochung, insbesondere eine Heisskochung mit zusätzlichem Sauerstoff, werden die textilen Farbrestbestandteile in hohem Masse derart aufgelöst, dass dies auch wie ein Deinking-Verfahren wirkt. Dieses spezielle Deinking findet aber ohne zusätzliche chemische oder physikalische Massnahmen statt, da die eingesetzten Chemikalien und Prozesse zum Aufschluss der zu recycelnden Alttextilien bereits zwingend benötigt werden. Des Weiteren basieren in der Papierindustrie Deinking-Verfahren auf Sortierung und Flotation zur Entfernung von Druckfarbe. Diese Prozesse werden im Standardprozess der Voraufbereitung von Alttextilien zur Rückgewinnung von Zellstoff ebenfalls standardmässig angewendet. Dies führt bei der Vermengung einer derart hergestellten Cellulose mit Cellulose aus dem Papierrecycling bei entsprechenden Randbedingungen zu einem zusätzlich weisseren Cellstoffmix und somit zu einem weisseren Papier, was zusätzlich die nachfolgenden Bleichschritte reduziert.

Gemäß einem exemplarischen Ausführungsbeispiel können folgende Wirkmechanismen relevant sein:
a) Dieser Zellstoff verbindet beide Wirkarten in vorbildlicher Weise:
   Absorption: durch Faserstruktur, Fibrillation, Porenstruktur;
   Adsorption: a1) für wässrige Kontamination (Säuren, Laugen, Dispersionen, wässrige Bindemittel) durch den hohen Gehalt an Hydroxylgruppen (Hydrophilie), a2) für Lipid-Kontamination (Öle, Fette, Mineralölprodukte, Lösemittel, Lacke, Treibstoffe) durch den Restgehalt an Polyurethan, Polyamid und anderen Polymeren (Hydrophobie);
b) Insbesondere der Gehalt an Elastan vereinigt Wirkarten in einem Molekül und verbessert das Wasser/Ölbindevermögen entscheidend;
c) leichte mechanische Entfernbarkeit vom Anwendungsort (Straße...);
d) Der natürliche textile Ursprung gewährleistet eine problemlose Verrottung auf Deponien;
e) Verbrennung ist rückstandsfrei möglich. Keinerlei Gefahrenstoffe im Rauchgas;
f) Vorhandene (kaum vermeidbare) TiOz - Inhalte, in der Regel in sehr feiner Verteilung, wirken im Zusammenhang mit UV-Licht (Freianwendung) als Oxidationskatalysator zum Abbau von org. Verunreinigungen, die -OH, -O, COOR, -C=C-, Gruppen enthalten: Solche sind: Öle, Fette, Lösemittel, Salben, Glykole (Frostschutzmittel), Biodiesel: Dies kann, insbesondere bei geringen Kontaminationsbelastung zu Vorteilen führen.

**Figur 1** zeigt ein exemplarisches Ausführungsbeispiel eines Verfahrens 100 zum Herstellen eines cellulosischen Papierstoffes 150. Zunächst wird eine Mischung von Alttextilien als Ausgangsstoff 101 bereitgestellt (siehe Block 105). Der Alttextil Mix umfasst Reste aus einer Kleiderherstellung sowie Altkleider und weist Cellulose (Fasern) und nicht-cellulosische Fremdstoffe auf. Bei den nicht-cellulosischen Fremdstoffen handelt es sich um synthetische Fasern (Kunststoffe) und Metalloxide. Die synthetischen Fasern weisen PUR, insbesondere Elastan, Polyester (z.B. PET), Polyamid auf. Die Metalloxide weisen Pigmente wie Titandioxid und Zinkoxid auf. Der Schritt des Bereitstellens umfasst ein

Zerkleinern der Alttextilien. Das Bereitstellen 105 umfasst ein mechanisches Zerkleinern des Ausgangsstoffs 101 durch Schreddern. Dadurch können vor allem große nicht-cellulosische Störstoffe aus dem Ausgangsstoff 101 entfernt werden, beispielsweise Knöpfe, Nähte und Drucke der Altkleider, die zum Erzeugen des Ausgangsstoffs 101 zumindest teilweise verwendet worden sind. Durch das mechanische Zerkleinern kann zum Beispiel der Ausgangsstoff 101 in Einzelfasern zertrennt werden. Hierbei ist zu beachten, dass das beschriebene mechanische Zerkleinern gemäß einem weiteren Ausführungsbeispiel auch während des Abreicherungsprozesses durchgeführt werden kann, insbesondere vor dem Abreichern.

Es ist auch möglich (siehe Block 160), den Cellulose aufweisenden Ausgangsstoff 101 mit anderen Cellulose aufweisenden Materialien als weiterem Ausgangsstoff 111 gemeinsam für das nachfolgende Aufbereiten einzusetzen. Somit kann der Ausgangsstoff 101 mit dem weiteren Ausgangsstoff 111 vermischt werden, welcher Cellulose und/oder zumindest einen synthetischen Kunststoff aufweist. Dieser zugeführte weitere Ausgangsstoff 111 weist eine Zusammensetzung auf, welche von der Zusammensetzung in dem Ausgangsstoff 101 verschieden ist. Das Erzeugen des Papierstoffs 150 kann nun basierend auf dem Ausgangsstoff 101 und dem weiteren Ausgangsstoff 111 ausgeführt werden, so dass der Papierstoff 150 eine vorbestimmte Zusammensetzung (z.B. Anteil an synthetischem Kunststoff) enthält. Der weitere Ausgangsstoff 111 kann alternativ oder ergänzend zum Beispiel auch Reste aus einer Kleidungsherstellung aufweisen. In Figur 1 wird der weitere Ausgangsstoff 111 in aufbereiteter Form dem Abreicherungsprozess 120, insbesondere dem Koch-Prozess 121, zugeführt. Gemäß einem weiteren exemplarischen Ausführungsbeispiel kann der weitere Ausgangsstoff 111 auch vor dem Abreicherungsprozesses 120 (insbesondere im Wesentlichen zeitgleich mit dem Zuführen Ausgangsstoffs 101) oder sogar nach dem Abreicherungsprozess 120 zugeführt werden.

Der erwähnte Abreicherungsprozess 120 umfasst ein zumindest teilweises Abreichern 120 der nicht-cellulosischen Fremdstoffe von der Cellulose, um einen abgereicherten Ausgangsstoff 110 bereitzustellen. Das Abreichern 120 umfasst das Durchführen einer mechanischen Abtrennung 121 und einer chemischen Abtrennung 122.

Das mechanische Trennen 121 umfasst eine Dichtetrennung, insbesondere mittels eines Flotationsverfahrens, um z.B. Polyester selektiv von Cellulose abzureichern. Hierbei können Faserbestandteile in einem flüssigen (wässrigen) Medium suspendiert werden. Trennen der nicht-cellulosischen Fasern von den cellulosischen Fasern gelingt aufgrund unterschiedlicher physikalischer Eigenschaften in dem flüssigen Medium, insbesondere unterschiedlichen gravitativen, zentrifugalkraftbezogenen, flotativen und/oder elektrostatischen Eigenschaften. Neben der Trennung von Cellulose und nicht-cellulosischen Fremdstoffen können auch Cellulose Fraktionen mit verschiedenen Kettenlängen auf diese Weise getrennt werden.

Das chemische Abtrennen 121 weist einen Koch-Prozess (diskontinuierlich oder kontinuierlich) in einer Koch-Vorrichtung (z.B. ein Druckkessel bzw. Digester) auf. Hierbei wird eine alkalische Kochlösung verwendet, welche Natriumhydroxid (in dem Bereich 1 bis 35% (w/w)) aufweist. Der pH liegt in dem Bereich 7 bis 14. Der Koch-Prozess findet bei einer Temperatur in dem Bereich 90 bis 185°C und einem Druck in dem Bereich 1 bis 21 Bar für 45 bis 270 Minuten statt. Zusätzlich enthält die Koch-Lösung einen Cellulose-stabilisierenden Wirkstoff wie ein Magnesiumsalz, um unerwünschter Degradierung entgegenzuwirken. Unter dem erhöhten Druck wird der Ausgangsstoff 101 in der Lauge gekocht, um unerwünschte Bestandteile abzureichern (z.B. Farbstoffe, Ausrüstungen, Gebrauchsbelastung aus biologischen Quellen). Ferner werden auf diese Weise auch synthetische Fasern und Metalloxide abgereichert. Mit Vorteil kann der Koch-Prozess 121 ein Zuführen von einem oxidierenden Wirkstoff, z.B. Sauerstoff, umfassen. Dies kann alternativ oder ergänzend zu einem Bleichen durchgeführt werden. Ferner können mit Vorteil die Metalloxide chemisch reduziert werden.

In einem exemplarischen Ausführungsbeispiel umfasst das Abreichern der synthetischen Fasern (siehe Block 125) ein im Wesentlichen vollständiges Abreichern der synthetischen Fasern von der Cellulose. Auf diese Weise werden hochreine Cellulosefasern als abgereicherter Ausgangsstoff 110 bereitgestellt.

In einem anderen Ausführungsbeispiel werden vordefinierte synthetische Fasern selektiv abgereichert, während andere vordefinierte synthetische Fasern in dem abgereicherten Ausgangsstoff 110 verbleiben. Hierbei werden Kunststoffe wie Polyamide und bestimmte Polyester zumindest teilweise (insbesondere möglichst vollständig) abgereichert, während Polyester und/oder Elastan (zumindest teilweise) behalten werden. Polyester kann in dem herzustellenden Papierstoff 150 als Haftvermittler wirken, während Elastan die Ölbindefähigkeit erhöhen könnte. Es findet also ein teilweises selektives Abreichern 125 der nicht-cellulosischen Fremdstoffe von der Cellulose derart statt, dass vordefinierte synthetische Fasern in dem abgereicherten Ausgangsstoff 110 teilweise verbleiben, welche dann in dem Papierstoff 150 vordefinierte Eigenschaften hervorrufen, aufweist. Die Prozessparameter (u.a. Temperatur, Druck, Verweildauer, Kochlösung, Mischen, Zusammensetzung) des Abreicherungsprozesses 120 werden derart gesteuert, dass die gewünschten Eigenschaften im Endprodukt erhalten werden.

In einem Ausführungsbeispiel werden die Prozessparameter des Aufreinigungsprozesss 120 derart gesteuert, dass die durchschnittliche Kettenlänge der Cellulose in dem aufbereiteten Ausgangsstoffs 110 in einem bestimmten vordefinierten Bereich ist. Es wird ein selektives Abreichern (siehe Block 127) von Cellulose (Fasern) durchgeführt, deren mittlere Kettenlänge unter einem vordefinierten Wert, z.B. 300 Glukoseeinheiten, bevorzugt in dem Bereich 20 bis 150 Glukoseeinheiten, ist. Dies kann beispielsweise über das mechanische Abtrennen, insbesondere die Dichtetrennung, erreicht werden.

In einem Ausführungsbeispiel werden die Prozessparameter derart eingestellt, dass ein selektives Abreichern (siehe Block 126) der nicht-cellulosischen Fremdstoffe von der Cellulose derart stattfindet, dass intrinsische Fremdstoffe in dem abgereicherten Ausgangsstoff 110 verbleiben. Bei diesen intrinsischen nicht-Cellulose Fremdstoffen handelt es sich um Metalloxide wie Titanoxid oder Zinkoxid, welche in den Textilien als Pigmente verwendet werden.

Aus dem abgereicherten Ausgangsstoff 110 wird nach dem Aufbereitungsprozess 120 ein cellulosischer Papierstoff 150 gebildet (siehe Schritt 170). Der abgereicherte Ausgangsstoff 110 kann zunächst mehrere Reinigungsschritte 130, 135 durchlaufen. Ein solches optionales Reinigen kann zum Beispiel ein zumindest teilweises Entfernen von (Rest-)Farbstoffen durch Bleichen (Block 130) aufweisen. Dadurch ist es möglich, den Ausgangsstoff 110 ganz oder teilweise zu entfärben, beispielsweise um weiße oder graue Papierstoffe 150 herzustellen. Ferner wird der aufgereinigte Ausgangsstoff 110 einem Reinigungsschritt 135 unterzogen, bei welchen es sich um eine wässrige Reinigung oder um eine chemische Reinigung handelt. Im letzteren Fall werden organische Lösungsmittel wie Ethanol oder Tenside verwendet.

Der bearbeitete aufbereitete Ausgangsstoff 110 liegt nun als wässrige Cellulose Suspension vor. Diese wird dann einer Pulpe 145 zugeführt (siehe Schritt 140). Alternativ wird der bearbeitete aufbereitete Ausgangsstoff 110 mit einem Binder versehen und stellt dann selbst eine Pulpe 145 dar. Die Pulpe 145 weist Wasser, Cellulose und den Binder auf. Zusätzlich weist die Pulpe, abhängig von dem Aufbereitungsprozess 120, funktionalisierte Restbestandteile der Alttextilien auf. Hierbei handelt es sich z.B. um Elastan zur Haftverbesserung oder Titandioxid als Codierungsmittel. Die Pulpe 145 wird dann getrocknet, so dass das Bilden des cellulosischen Papierstoffs 150 aus der Pulpe 145 ermöglicht wird. Der Papierstoff 150 liegt nach dem Trocknen (bzw. einem Papierschöpf-Schritt) als Papier oder als Vorprodukt für die Herstellung von Papier oder Papier-ähnlichen Stoffen (Karton, Filter...) vor.

## Patentansprüche

1. Ein Verfahren zum Selektieren von Cellulose-haltigen Alttextilien, das Verfahren aufweisend:
Bestimmen eines für die Qualität, insbesondere den durchschnittlichen Polymerisationsgrad, der Cellulose indikativen Qualitätskriterions;
Vergleichen des bestimmten Qualitätskriterions mit einem vordefinierten Qualitätskriterion; und, basierend auf dem Ergebnis des Bestimmens:
Zuführen von ersten Cellulose-haltigen Alttextilien, deren Qualitätskriterion nicht dem vordefinierten Qualitätskriterion entspricht, zu einem Verfahren zum Herstellen eines Papierstoffes (150);
Zuführen von zweiten Cellulose-haltigen Alttextilien, deren Qualitätskriterion dem vordefinierten Qualitätskriterion entspricht, zu einem Verfahren zum Herstellen eines regenerierten cellulosischen Formkörpers, insbesondere einem von einem Lyocellverfahren oder einem Viskoseverfahren, insbesondere einem Carbamatverfahren oder einem Kaltalkaliverfahren.

2. Das Verfahren zum Selektieren von Cellulose-haltigen Alttextilien gemäß Anspruch 1, wobei das Verfahren zum Herstellen eines cellulosischen Papierstoffes (150) aufweist:
Bereitstellen (105) von Alttextilien als Ausgangsstoff (101), wobei die Alttextilien Cellulose und nicht-cellulosische Fremdstoffe, insbesondere synthetischen Kunststoff und/oder Metalloxide, aufweisen;
zumindest teilweises Abreichern (120) der nicht-cellulosischen Fremdstoffe von der Cellulose, um einen abgereicherten Ausgangsstoff (110) bereitzustellen, wobei das Abreichern (120) aufweist:
mechanisches Abtrennen (122) zumindest eines Teils der nicht-cellulosischen Fremdstoffe; und/oder
chemisches Abtrennen (121) zumindest eines Teils der der nicht-cellulosischen Fremdstoffe; und
Bilden (170) des cellulosischen Papierstoffs (150) aus dem abgereicherten Ausgangsstoff (110).

3. Das Verfahren gemäß Anspruch 2, wobei das chemische Abtrennen (121) aufweist:
Durchführen eines Koch-Prozesses (121), insbesondere mittels einer alkalischen Kochlösung,
weiter insbesondere wobei der Koch-Prozess (121) derart durchgeführt wird, dass der durchschnittliche Polymerisationsgrad der Cellulose des abgereicherten Ausgangsstoffs (110) innerhalb eines vordefinierten Bereichs ist.

4. Das Verfahren gemäß einem beliebigen der vorhergehenden Ansprüche, wobei das Abreichern (120) ferner aufweist:
Zuführen eines Oxidationsmittels, insbesondere Sauerstoff, in den Koch-Prozess (121); und/oder
chemisches Reduzieren zumindest eines Teils der Metalloxide des Ausgangsstoffes (101).

5. Das Verfahren gemäß einem beliebigen der vorhergehenden Ansprüche, wobei das Abreichern (120) ferner aufweist:
Steuern der Prozessparameter derart, dass der durchschnittliche Polymerisationsgrad der Cellulose des abgereicherten Ausgangsstoffes (110) im Wesentlichen in einem vordefinierten Bereich ist,
insbesondere wobei die Cellulose des abgereicherten Ausgangsstoffes (110) einen durchschnittlichen Polymerisationsgrad von 300 Monomeren oder mehr, insbesondere 500 Monomeren oder mehr, aufweist,
weiter insbesondere wobei 10% oder weniger der Cellulose einen durchschnittlichen Polymerisationsgrad in dem Bereich 50 bis 200 Monomere aufweist.

6. Das Verfahren gemäß einem beliebigen der vorhergehenden Ansprüche, wobei das Abreichern (120) ferner aufweist:
Abreichern (127), insbesondere selektives Abreichern, von Cellulose, deren durchschnittlicher Polymerisationsgrad von einem vordefinierten Bereich abweicht,
insbesondere von Cellulose, deren durchschnittlicher Polymerisationsgrad weniger als 300 Monomere, weiter insbesondere weniger als 200 Monomere, ist.

7. Das Verfahren gemäß einem beliebigen der vorhergehenden Ansprüche, ferner aufweisend:
Mischen (160) des abgereicherten Ausgangsstoffs (110) mit einem weiteren Ausgangsstoff (111) zum Erhalten eines gemischten Ausgangsstoffes, insbesondere derart, dass der gemischte Ausgangsstoff vordefinierte Eigenschaften aufweist.

8. Das Verfahren gemäß einem beliebigen der vorhergehenden Ansprüche, ferner aufweisend:
teilweises Abreichern (126), insbesondere selektives Abreichern, der nicht-cellulosischen Fremdstoffe von der Cellulose derart,
dass zumindest ein vordefinierter synthetische Kunststoff in dem abgereicherten Ausgangsstoff (110) zumindest teilweise verbleibt,
insbesondere derart, dass der gebildete Papierstoff (150) vordefinierte Eigenschaften aufweist;
weiter insbesondere wobei der zumindest teilweise in dem abgereicherten Ausgangsstoff (110) verbleibende vordefinierte synthetische Kunststoff PUR, insbesondere Elastan, aufweist.

9. Das Verfahren gemäß einem beliebigen der vorhergehenden Ansprüche, wobei das Abreichern (120) ferner aufweist:
zumindest teilweises, insbesondere selektives, Behalten von Metalloxiden, insbesondere Titandioxid, derart, dass diese als Oxidationskatalysator für organische Verunreinigungen wirken können.

10. Das Verfahren gemäß einem beliebigen der vorhergehenden Ansprüche, aufweisend zumindest eines der folgenden Merkmale:
teilweises, insbesondere selektives, Abreichern (125, 126) der nicht-cellulosischen Fremdstoffe von der Cellulose derart, dass intrinsische Fremdstoffe, insbesondere Metalloxide, weiter insbesondere Pigmente, zumindest teilweise in dem abgereicherten Ausgangsstoff (110) verbleiben;
im Wesentlichen vollständiges Abreichern (125) der nicht-cellulosischen Fremdstoffe, insbesondere des synthetischen Kunststoffs, von der Cellulose derart, dass hochreine Cellulosefasern als abgereicherter Ausgangsstoff (110) bereitgestellt werden;
Zuführen (140) des abgereicherten Ausgangsstoffs (110), insbesondere als wässrige Cellulose Suspension, zu einer Pulpe (145), und
Bilden des cellulosischen Papierstoffs (150) aus der Pulpe (145).

## Claims

1. A method for selecting cellulose-containing used textiles, the method comprising:
determining a quality criterion which is indicative for the quality, in particular the average degree of polymerization, of the cellulose;
comparing the determined quality criterion with a predefined quality criterion; and based on the result of the determination:
supplying first cellulose-containing used textiles whose quality criterion does not correspond to the predefined quality criterion to a method for manufacturing a paper material (150);
supplying second cellulose-containing used textiles whose quality criterion corresponds to the predefined quality criterion to a method for manufacturing a regenerated cellulosic molded body, in particular a lyocell method or a viscose method, in particular a carbamate method or a cold alkali method.

2. The method for selecting cellulose-containing used textiles according to claim 1, wherein the method for manufacturing a cellulosic paper material (150) comprises:
providing (105) used textiles as starting material (101), wherein the used textiles comprise cellulose and non-cellulosic foreign matters, in particular synthetic plastic and/or metal oxides;
at least partially depleting (120) the non-cellulosic foreign matters from the cellulose, to provide a depleted starting material (110), wherein depleting (120) comprises:
mechanically separating (122) at least a part of the non-cellulosic foreign matters; and/or
chemically separating (121) at least a part of the non-cellulosic foreign matters; and
forming (170) the cellulosic paper material (150) from the depleted starting material (110).

3. The method according to claim 2, wherein chemically separating (121) comprises:
performing a boiling process (121), in particular by an alkaline boiling solution,
further in particular wherein the boiling process (121) is performed such that the average degree of polymerization of the cellulose of the depleted starting material (110) is within a predefined range.

4. The method according to any of the previous claims, wherein depleting (120) further comprises:
supplying an oxidizing agent, in particular oxygen, into the boiling process (121); and/or
chemically reducing at least a part of the metal oxides of the starting material (101).

5. The method according to any of the previous claims, wherein depleting (120) further comprises:
controlling the process parameters such that the average degree of polymerization of the cellulose of the depleted starting material (110) is substantially in a predefined range,
in particular wherein the cellulose of the depleted starting material (110) comprises an average degree of polymerization of 300 monomers or more, in particular 500 monomers or more,
further in particular wherein 10 % or less of the cellulose comprises an average degree of polymerization in the range 50 to 200 monomers.

6. The method according to any of the previous claims, wherein depleting (120) further comprises:
depleting (127), in particular selectively depleting, cellulose whose average degree of polymerization deviates from a predefined range, in particular cellulose whose average degree of polymerization is less than 300 monomers, further in particular less than 200 monomers.

7. The method according to any of the previous claims, further comprising:
mixing (160) the depleted starting material (110) with a further starting material (111) for obtaining a mixed starting material, in particular such that the mixed starting material comprises predefined properties.

8. The method according to any of the previous claims, further comprising:
partially depleting (126), in particular selectively depleting, the non-cellulosic foreign matters from the cellulose,
such that at least a predefined synthetic plastic remains partially in the depleted starting material (110),
in particular such that the formed paper material (150) comprises predefined properties;
further in particular wherein the predefined synthetic plastic which remains at least partially in the depleted starting material (110) comprises predefined synthetic plastic PUR, in particular elastane.

9. The method according to any of the previous claims, wherein depleting (120) further comprises:
at least partially, in particular selectively, maintaining metal oxides, in particular titanium dioxide, such that they may act as an oxidizing catalyst for organic contaminations.

10. The method according to any of the previous claims, comprising at least one of the following features:
partially, in particular selectively, depleting (125, 126) the non-cellulosic foreign matters from the cellulose, such that intrinsic foreign matters, in particular metal oxides, further in particular pigments, remain at least partially in the depleted starting material (110);
substantially completely depleting (125) the non-cellulosic foreign matters, in particular the synthetic plastic, from the cellulose, such that highly pure cellulose fibers are provided as depleted starting material (110);
supplying (140) the depleted starting material (110), in particular as aqueous cellulose suspension, to a pulp (145), and
forming the cellulosic paper material (150) from the pulp (145).

## Revendications

1. Procédé de sélection de textiles usagés contenant de la cellulose, dans lequel le procédé comprend les étapes consistant à :
déterminer un critère de qualité indicatif de la qualité de la cellulose, en particulier de son degré moyen de polymérisation ;
comparer le critère de qualité déterminé avec un critère de qualité prédéfini ; et, en se basant sur le résultat de ladite détermination :
introduire des premiers textiles usagés contenant de la cellulose, dont le critère de qualité ne correspond pas au critère de qualité prédéfini, dans un procédé de fabrication d'une pâte à papier (150) ;
introduire des seconds textiles usagés contenant de la cellulose, dont le critère de qualité correspond au critère de qualité prédéfini, dans un procédé de fabrication d'un corps moulé cellulosique régénéré, en particulier dans un procédé choisi parmi un procédé lyocell ou un procédé viscose, en particulier parmi un procédé carbamate ou un procédé d'extraction alcaline à froid.

2. Procédé de sélection de textiles usagés contenant de la cellulose selon la revendication 1, dans lequel le procédé de fabrication d'une pâte à papier cellulosique (150) comprend les étapes consistant à :
fournir (105) des textiles usagés en tant que matière première (101), dans lequel les textiles usagés comprennent de la cellulose et des matières étrangères non cellulosiques, en particulier du plastique synthétique et/ou des oxydes métalliques ;
appauvrir (120) au moins partiellement la cellulose en matières étrangères non cellulosiques afin de fournir une matière première appauvrie (110), dans lequel l'étape d'appauvrissement (120) comprend les étapes consistant à :
séparer mécaniquement (122) au moins une partie des matières étrangères non cellulosiques ; et/ou
séparer chimiquement (121) au moins une partie des matières étrangères non cellulosiques; et
former (170) la pâte à papier cellulosique (150) à partir de la matière première appauvrie (110).

3. Procédé selon la revendication 2, dans lequel l'étape de séparation chimique (121) comprend l'étape consistant à :
mettre en œuvre un procédé de cuisson (121), en particulier au moyen d'une solution de cuisson alcaline,
en particulier dans lequel le procédé de cuisson (121) est en outre mis en œuvre de telle manière que le degré de polymérisation moyen de la cellulose de la matière première appauvrie (110) se situe dans une plage prédéfinie.

4. Procédé selon l'une quelconque des revendications précédentes, dans lequel l'étape d'appauvrissement (120) comprend en outre les étapes consistant à :
introduire un agent oxydant, en particulier de l'oxygène, dans le procédé de cuisson (121) ; et/ou
réduire chimiquement au moins une partie des oxydes métalliques de la matière première (101).

5. Procédé selon l'une quelconque des revendications précédentes, dans lequel l'étape d'appauvrissement (120) comprend en outre l'étape consistant à :
commander les paramètres de procédé de telle manière que le degré moyen de polymérisation de la cellulose de la matière première appauvrie (110) se situe essentiellement dans une plage prédéfinie,
en particulier dans lequel la cellulose de la matière première appauvrie (110) présente un degré moyen de polymérisation supérieur ou égal à 300 monomères, en particulier supérieur ou égal à 500 monomères,
en particulier dans lequel 10 % ou moins de la cellulose présente en outre un degré de polymérisation moyen situé dans la plage comprise entre 50 et 200 monomères.

6. Procédé selon l'une quelconque des revendications précédentes, dans lequel l'étape d'appauvrissement (120) comprend en outre l'étape consistant à :
appauvrir (127), en particulier appauvrir de manière sélective, la cellulose dont le degré moyen de polymérisation s'écarte d'une plage prédéfinie, en particulier la cellulose dont le degré moyen de polymérisation est inférieur à 300 monomères, de manière plus particulièrement préférée est inférieur à 200 monomères.

7. Procédé selon l'une quelconque des revendications précédentes, comprenant en outre l'étape consistant à :
mélanger (160) la matière première appauvrie (110) avec une matière première supplémentaire (111) afin d'obtenir une matière première mixte, en particulier de telle manière que la matière première mixte présente des propriétés prédéfinies.

8. Procédé selon l'une quelconque des revendications précédentes, comprenant en outre l'étape consistant à :
appauvrir partiellement (126), en particulier appauvrir de manière sélective, la cellulose en matières étrangères non cellulosiques, de telle manière que
au moins un plastique synthétique prédéfini demeure au moins partiellement dans la matière première appauvrie (110),
en particulier de telle manière que la pâte à papier (150) formée présente des propriétés prédéfinies ;
en particulier dans lequel le plastique synthétique prédéfini demeurant au moins partiellement dans la matière première appauvrie (110) présente du PUR (polyuréthane), en particulier de l'élasthanne.

9. Procédé selon l'une quelconque des revendications précédentes, dans lequel l'étape d'appauvrissement (120) comprend en outre l'étape consistant à :
conserver au moins partiellement, en particulier de manière sélective, les oxydes métalliques, en particulier le dioxyde de titane, de telle manière que lesdits oxydes métalliques puissent servir de catalyseur d'oxydation pour des impuretés organiques.

10. Procédé selon l'une quelconque des revendications précédentes, présentant au moins l'une des étapes caractéristiques ci-dessous consistant à :
appauvrir partiellement, en particulier de manière sélective (125, 126), la cellulose en matières étrangères non cellulosiques de telle manière que des matières étrangères intrinsèques, en particulier des oxydes métalliques, de manière plus particulièrement préférée des pigments, demeurent au moins partiellement dans la matière première appauvrie (110) ;
appauvrir de manière essentiellement complète (125) la cellulose en matières étrangères non cellulosiques, en particulier en plastique synthétique, de telle manière que des fibres de cellulose de haute pureté sont fournies comme matière première appauvrie (110) ;
introduire (140) la matière première appauvrie (110), en particulier sous forme de suspension aqueuse de cellulose, dans une pâte mécanique (145), et
former la pâte à papier cellulosique (150) à partir de la pâte mécanique (145).
